(19) Europäisches Patentamt / European Patent Office / Office européen des brevets

(11) EP 3 040 690 B1

(12) **EUROPEAN PATENT SPECIFICATION**

(45) Date of publication and mention of the grant of the patent:
**03.03.2021 Bulletin 2021/09**

(21) Application number: **13892425.3**

(22) Date of filing: **26.08.2013**

(51) Int Cl.:
***G01D 5/244*** *(2006.01)* ***B60L 3/00*** *(2019.01)*

(86) International application number:
**PCT/JP2013/072694**

(87) International publication number:
**WO 2015/029098 (05.03.2015 Gazette 2015/09)**

# (54) ANGLE ERROR CORRECTION DEVICE AND ANGLE ERROR CORRECTION METHOD FOR POSITION DETECTOR

WINKELFEHLERKORREKTURVORRICHTUNG UND WINKELFEHLERKORREKTURVERFAHREN FÜR POSITIONSDETEKTOR

DISPOSITIF DE CORRECTION D'ERREUR D'ANGLE ET PROCÉDÉ DE CORRECTION D'ERREUR D'ANGLE POUR DÉTECTEUR DE POSITION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.07.2016 Bulletin 2016/27**

(73) Proprietor: **Mitsubishi Electric Corporation**
**Tokyo 100-8310 (JP)**

(72) Inventors:
- **MINOBE, Morishige**
  **Tokyo 100-8310 (JP)**
- **SAKAI, Masaya**
  **Tokyo 100-8310 (JP)**

(74) Representative: **Witte, Weller & Partner Patentanwälte mbB**
**Postfach 10 54 62**
**70047 Stuttgart (DE)**

(56) References cited:
**EP-A1- 1 796 257**
**JP-A- 2012 145 371**
**JP-A- 2012 210 067**
**JP-A- 2013 057 590**
**US-A1- 2006 022 628**
**US-A1- 2009 167 296**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 040 690 B1

## Description

[Technical Field]

The present invention relates to an angular error correction device and an angular error correction method for a position sensor, for correcting an angular error in a position sensor that includes a periodic error uniquely determined in accordance with the rotational position of an electric motor, the position sensor being used in, for instance, control devices of elevator traction machines, control devices of automotive electric motors, and control devices of electric motors in machine tools.

[Background Art]

Conventional angle detection devices in resolvers are known wherein: an angle signal is detected by an angle detector, from a signal detected by a resolver; a position error is calculated by an angular error estimator by referring to the detected angle signal by using a feature in which an error waveform of the resolver is made up of an n-th order component determined specifically for the resolver, and reproducibility of the error waveform; a speed error signal is calculated by differentiating the position error; a detection error for each frequency component is calculated through frequency analysis of the speed error signal, for instance, on the basis of a Fourier transform; an estimated angular error signal is generated by combining the calculated detection errors; and the detected angle signal is corrected by an angle signal correction circuit, using the generated estimated angular error signal (see for instance, Patent Document 1), namely Japanese Patent Application No. 2012-145371.

Document US 2006/0022628 A1 shows a motor control system comprising a magnetic encoder including a magnetic drum fixed to an output shaft of a motor and a magnetic sensor provided against a periphery of the magnetic drum through a space, an angle calculating unit for calculating a rotational angle of the motor from an output of the magnetic encoder, an angle estimating unit for estimating the rotational angle, an error angle calculating unit for finding an error angle from an calculated angle calculated by the angle calculating unit and an estimated angle estimated by the angle estimating unit, an error-correction value calculating unit for calculating from the error angle an error-correction value that corresponds to

the rotational angle, a correction calculating unit for calculating a correction angle or a correction speed from the calculated angle and the error-correction value,; and a motor operation controlling unit for outputting to an inverter a voltage command value that corresponds to the correction angle or the correction speed.

Document JP 2012/210067 A shows a pulsation suppression device of a motor.

Document EP 1 796 257 A1 shows a position detecting device which can increase accuracy in detecting the pole position of a motor used to perform quick acceleration and deceleration over the range from a zero speed to a high rotation speed, and a synchronous motor driving device using the position detecting device. A position detector detects basic-wave component signals in sensor signals and executes position calculation. A correcting unit calculates signal information representing at least one of a gain, an offset and a phase by a phase detector from the basic-wave component signals detected by an error calculator, and makes correction based on the calculated signal information such that a position detection error is zero.

[Summary of Invention]

[Technical Problem]

The following problems arise however in conventional art.

In a speed detector of an angle detection device in a conventional resolver, the rotational speed of a motor is detected on the basis of an angle signal that is detected by an angle detector, and the angular error is estimated using this detected speed. The estimation precision of the angular error is determined, when the angular error is estimated using the detected speed, by the speed resolution of the angle detector or the speed detector. This is problematic in that, as a result, a quantization error arises in angle detectors or speed detectors of low speed resolution, and sufficient estimation precision of angular error fails to be achieved.

In order to solve such problems, it is an object of the present invention to provide an angular error correction device and an angular error correction method for a position sensor that allow estimating and correcting an angular error accurately.

[Solution to Problem]

The angular error correction device for a position sensor according to the present invention is as defined in the appended claims. It is an angular error correction device for a position sensor, for correcting an angular error of a position sensor that detects a rotational position of an electric motor and that includes a periodic error that is uniquely determined in accordance with the rotational position, the angular error correction device for a position sensor comprising: a current sensor that detects current flowing in the electric motor; a frequency analysis unit which, using the rotational position of the electric motor, analyzes the frequency of the current detected by the current sensor, and calculates an amplitude of a specific frequency component corresponding to the angular error; an angular error estimator which estimates, as an angular error estimated value, the angular error formed from the specific frequency component on the basis of the amplitude calculated by the frequency analysis unit and the rotational position of the electric motor; and an angular error correction unit which, using the angular error estimated value, corrects the angular error for the rotational position of the electric motor detected by the position sensor.

A method for correcting an angular error of a position sensor according to the present invention is executed by an angular error correction device for a position sensor, for correcting an angular error of a position sensor that detects a rotational position of an electric motor and that includes a periodic error that is uniquely determined in accordance with the rotational position, and the method comprises: a current detection step of detecting current flowing in the electric motor; a frequency analysis step of, using the rotational position of the electric motor, analyzing the frequency of the current detected in the current detection step, and calculating an amplitude of a specific frequency component corresponding to the angular error; an angular error estimation step of estimating, as an angular error estimated value, the angular error formed from the specific frequency component on the basis of the amplitude calculated in the frequency analysis step and the rotational position of the electric motor; and an angular error correction step of, using the angular error estimated value, correcting the angular error for the rotational position of the electric motor detected by the position sensor.

[Advantageous Effects of Invention]

In the angular error correction device and angular error correction method for a position sensor according to the present invention, a position sensor detects the rotational position of an electric motor, and includes a periodic error uniquely determined in accordance with the rotational position; a current sensor (step) detects current flowing in the electric motor; using the rotational position of the electric motor, a frequency analysis unit (step) analyzes the frequency of the current detected by the current sensor (step), and calculates an amplitude of a specific frequency component corresponding to the angular error; an angular error estimator (step) estimates, as an angular error estimated value, the angular error formed from the specific frequency component on the basis of the amplitude calculated by the frequency analysis unit (step) and the rotational position of the electric motor; and using the angular error estimated value, an angular error correction unit (step) corrects the angular error for the rotational position of the electric motor detected by the position sensor.

It becomes accordingly possible to provide an angular error correction device and an angular error correction method for a position sensor that allow estimating and correcting an angular error accurately.

[Brief Description of Drawings]

[Fig. 1]
FIG. 1 is a block diagram illustrating the overall configuration of a control device of an electric motor, including an angular error correction device for a position sensor according to the present invention.
[Fig. 2]
FIG. 2 is a block diagram illustrating a control device of an electric motor in which there is used the angular error correction device for a position sensor according to Embodiment 1 of the present invention.
[Fig. 3]
FIG. 3 is a block diagram illustrating a control device of an electric motor in which there is used the angular error correction device for a position sensor according to Embodiment 1 of the present invention.
[Fig. 4]
FIG. 4 is a block diagram illustrating a control device of an electric motor in which there is used the angular error correction device for a position sensor according to Embodiment 1 of the present invention.
[Fig. 5]
FIG. 5 is a block diagram illustrating a control device of an electric motor in which there is used the angular error correction device for a position sensor according to Embodiment 1 of the present invention.
[Fig. 6]
FIG. 6 is a graph illustrating an example of detection error in a position sensor of the angular error correction device for a position sensor according to Embodiment 1 of the present invention.

[Fig. 7]

FIG. 7 is a block diagram illustrating an angular error estimation unit of the angular error correction device for a position sensor according to Embodiment 1 of the present invention.

[Fig. 8]

FIG. 8 is a block diagram illustrating an angular error estimator of the angular error correction device for a position sensor according to Embodiment 1 of the present invention.

[Fig. 9]

FIG. 9 is a graph illustrating angular error amplitude after correction in a case where the amplitude is fixed and the phase is varied, in the angular error correction device for a position sensor according to Embodiment 1 of the present invention.

[Fig. 10]

FIG. 10 is a flowchart illustrating a process in the angular error estimator of the angular error correction device for a position sensor according to Embodiment 1 of the present invention.

[Fig. 11]

FIG. 11 is a graph illustrating an example of a frequency characteristic of an electric motor, in the angular error correction device for a position sensor according to Embodiment 2 of the present invention.

[Fig. 12]

FIG. 12 is a flowchart illustrating a process in an angular error estimating unit of the angular error correction device for a position sensor according to Embodiment 2 of the present invention.

[Fig. 13]

FIG. 13 is a block diagram illustrating an angular error estimator of the angular error correction device for a position sensor according to Embodiment 3 of the present invention.

[Description of Embodiments]

Preferred embodiments of the angular error correction device and angular error correction method for a position sensor according to the present invention will be explained next with reference to accompanying drawings. Identical or corresponding portions in the various figures will be explained using identical reference symbols.

Embodiment 1

FIG. 1 is a block diagram illustrating the overall configuration of a control device of an electric motor, including an angular error correction device for a position sensor according to the present invention. FIGS. 2 to 5 are block diagrams illustrating a control device of an electric motor in which there is used the angular error correction device for a position sensor according to Embodiment 1 of the present invention.

In FIGS. 1 to 5, the control device of an electric motor includes a speed command value generation unit 1, a speed controller 2, a current controller 3, an inverter 4, an electric motor 5, a position sensor 6, a current sensor 7, a speed computing unit 8, a detected position correction unit 9, a position computing unit 11, a coordinate converter 12 and an angular error estimation unit 20.

The speed command value generation unit 1 generates and outputs a speed command value for the electric motor 5. Although not illustrated in the figures, the speed command value generation unit 1 may include a position control system. The present invention can be used also in a case where the speed command value generation unit 1 includes a position control system.

The speed controller 2 has, as the input thereof, a difference between the speed command value from the speed command value generation unit 1 and the rotational speed of the electric motor 5, as calculated by the speed computing unit 8, and generates and outputs a current command value for the electric motor 5.

The speed computing unit 8 calculates and outputs the rotational speed of the electric motor 5 on the basis of position information or angle information in which the rotational position of the electric motor 5, being the output of the position sensor 6, has been corrected by the detected position correction unit 9. Most simply, the speed computing unit 8 calculates the rotational speed through time differentiation of the position or the angle.

The speed computing unit 8 may perform speed computation on the basis of position information (for instance, number of pulses in an optical encoder) from the position sensor 6, as illustrated in FIGS. 2 and 4, or may perform speed computation on the basis of angle information calculated by the position computing unit 11, as illustrated in FIGS. 3 and 5. The speed computing unit 8 may include a configuration for measuring time.

The current controller 3 has, as the input thereof, a difference between the current command value from the speed controller 2 and a phase current being the output from the current sensor 7 illustrated in FIGS. 2 and 3, or an axis current of the electric motor 5, obtained through conversion of phase current to d-q axes or the like, by a coordinate converter 12, illustrated in FIGS. 4 and 5. The current controller 3 generates and outputs a voltage command value of the electric motor 5.

The position computing unit 11 calculates and outputs angle information of the electric motor 5, on the basis of the rotational position of the electric motor 5, being the output of the position sensor 6, or position information corrected by the detected position correction unit 9. In the case of vector control of the electric motor 5, the coordinate converter 12 converts the phase current from the current sensor 7 to coordinates suitable for control, for instance $\alpha$-$\beta$ axes, d-q axes or $\gamma$-$\delta$ axes.

The detected position correction unit 9 adds/subtracts an angular error estimated value, being the output of the angular error estimation unit 20, to/from the rotational position of the electric motor 5, being the output of the position sensor 6, or to/from angle information obtained by converting, by the position computing unit 11, the rotational position from the position sensor 6, and outputs the corrected position information or angle information.

The current sensor 7 measures the current in the electric motor 5. For instance, there may be measured phase current of three phases, although phase current of two phases is often measured, in a case where the electric motor 5 is a three-phase electric motor. In FIGS. 1 to 5, the current sensor 7 measures the output current of the inverter 4, but the current sensor 7 may estimate respective phase currents through measurement of a bus current of the inverter 4, as in a current measurement scheme by a one-shunt resistor. This does not affect the present invention in any way.

The inverter 4 converts the voltage of a power source, not shown, to a desired variable-voltage variable-frequency, on the basis of the voltage command value from the current controller 3. In the present invention, the inverter 4 denotes a variable-voltage variable-frequency power converter such as a power converter in which AC voltage is converted to DC voltage by a converter, and the DC voltage is thereafter converted to AC voltage by an inverter, for instance as in inverter devices that are available in the market, or alternatively, a power converter that converts AC voltage directly to AC of variable voltage and variable frequency, as in matrix converters.

The inverter 4 according to Embodiment 1 of the present invention may include the function of coordinate conversion, in addition to the function of the inverter 4 described above. In a case where the voltage command value is a voltage command value in the d-q axes, specifically, the term inverter 4 encompasses also instances where the latter has also a coordinate conversion function of conversion to voltage according to an instructed voltage command value, through conversion of the voltage command value in the d-q axes to phase voltage or to line voltage. The present invention can also be used also when there is provided a device or means, not shown, for correcting the dead time of the inverter 4.

The position sensor 6, for instance an optical encoder, magnetic encoder, resolver or the like, detects the rotational position of the electric motor 5, as required to control the electric motor 5. As illustrated in FIG. 6, information on the rotational position output by the position sensor 6 includes a periodic error that is uniquely determined in accordance with the rotational position of the electric motor 5.

Herein, the periodic error that is uniquely determined in accordance with the rotational position of the electric motor 5 denotes for instance a detection error of the resolver described in Patent Document 1 (paragraphs [0020], [0021]), or a given error in reproducibility according to the rotational position, for instance missing pulses and/or inter-pulse distance imbalance, derived from slit defects in an optical encoder.

Hereafter, the periodic error uniquely determined in accordance with the rotational position of the electric motor 5 will be expressed as an angular error $\theta_{err}$ resulting from conversion of position information to an angle. The present invention can be used in an instance where the position sensor 6 includes a periodic error uniquely determined in accordance with the rotational position of the electric motor 5, and a main component order of the angular error $\theta_{err}$ is known.

The periodic angular error $\theta_{err}$ of the position sensor 6 can be expressed approximately using sine waves, as in Expression (1) below. In Embodiment 1 of the present invention notations have been unified the form of sine waves, since there is no essential difference between a sine wave notation and a cosine wave notation.

[Math. 1]

$$\theta err \approx A_1 \sin(N_1\theta_m + \varphi_1) + A_2 \sin(N_2\theta_m + \varphi_2) + \cdots + A_n \sin(N_n\theta_m + \varphi_n) \quad \ldots \ (1)$$

In Expression (1), $\theta_m$ denotes the mechanical angle of the electric motor 5, $A_1$ denotes an error amplitude of the $N_1$-th order, $A_2$ denotes an error amplitude of the $N_2$-th order, $A_n$ denotes an error amplitude of the $N_n$-th order, $\varphi_1$ denotes a phase shift (error phase) of the $N_1$-th order with respect to the mechanical angle of the electric motor 5, $\varphi_2$ denotes a phase shift of the $N_2$-th order with respect to the mechanical angle of the electric motor 5, and $\varphi_n$ denotes a phase shift of the $N_n$-th order with respect to the mechanical angle of the electric motor 5.

The spatial orders $N_1$,$N_2$...$N_n$ in Expression (1), which need not be successive integers such as 1, 2...Nn, are spatial orders of the main component of the periodic error uniquely determined in accordance with the rotational position of the electric motor 5. Herein, the term main component denotes a component the spatial order amplitude of which is larger than the amplitude at other frequencies.

Three or more frequency components are combined in the notation of Expression (1), but the frequency component of the periodic angular error $\theta_{err}$ may be made up of one, two or more components.

FIG. 7 is a block diagram illustrating the angular error estimation unit 20 of the angular error correction device for a position sensor according to Embodiment 1 of the present invention. In FIG. 7, the angular error estimation unit 20 has a frequency analysis unit 21 and an angular error estimator 22.

The frequency analysis unit 21 has, as inputs thereof, the phase current from the current sensor 7, and the position information or angle information in which the rotational position of the electric motor 5, being the output of the position sensor 6, has been corrected by the detected position correction unit 9; herein, the frequency analysis unit 21 obtains an amplitude, or amplitude and phase, at a desired frequency of the input current.

Preferably, the frequency analysis unit 21 has a configuration wherein there is obtained the amplitude and phase at a desired frequency of the signal that is input, for instance as in a Fourier transform, a Fourier series analysis or a fast Fourier transform. However, the frequency analysis unit 21 may be configured to extract a desired frequency signal, as in a filter that combines a notch filter and a band pass filter, and calculate the desired amplitude and phase of the input signal, by way of an amplitude detection unit and a phase detection unit. The filter that is used herein may be an electrical filter, being a combination of resistors, capacitors, coils and the like, or may be a process executed in a computer.

In Embodiment 1 of the present invention the frequency analysis unit 21 may adopt any configuration, so long as the frequency analysis unit 21 can detect information that is proportional to the amplitude of the desired frequency, or information that is proportional to a power of the amplitude. In FIG. 2 and FIG. 3 phase current is the input, but there may be input any one of a d-axis current and a q-axis current, a $\gamma$-axis current and a $\delta$-axis current, or an $\alpha$-axis current and a $\beta$-axis current, resulting from coordinate conversion of the phase current, as illustrated in FIG. 4 and FIG. 5.

The signal at a desired frequency (specific frequency) denotes herein a signal of a frequency, identical to that of the main component of the angular error $\theta_{err}$, derived from the periodic angular error $\theta_{err}$ of the position sensor 6. In Embodiment 1 of the present invention, the desired frequency is expressed as a spatial frequency, but being expressed as a temporal frequency would entail no essential difference.

The term spatial frequency denotes the frequency in a specific interval, which in Embodiment 1 of the present invention is one rotation of the electric motor 5. Further, a signal of N periodic waves per rotation of the electric motor 5 is referred to as a wave of spatial order N.

In the control device of the electric motor 5 that is provided with the position sensor 6, the error of the position sensor 6 has periodicity in accordance with the rotational position of the electric motor 5. Therefore, frequency analysis involves preferably analysis by spatial frequency. In Expression (1) as well, the angular error $\theta_{err}$ is expressed on the basis of spatial frequency, while the inputs of the frequency analysis unit 21 as well illustrated in FIGS. 1 to 5 are inputs (current and angle) corresponding to spatial frequency analysis.

However, Embodiment 1 of the present invention can be used also in frequency analysis by temporal frequency. In the case of frequency analysis by temporal frequency, frequency analysis is carried out using, as inputs, a detected speed, a measured time by a time measurement unit, and current, instead of using current and angle as inputs.

The angular error estimator 22 has, as inputs, the current amplitude value of the desired frequency component, being the output of the frequency analysis unit 21, and the angle information in which the rotational position of the electric motor 5, being the output of the position sensor 6, has been corrected by the detected position correction unit 9. The angular error estimator 22 estimates, in accordance with the estimation method described below, the periodic angular error $\theta_{err}$ that is uniquely determined in accordance with the rotational position of the electric motor 5, and outputs the angular error estimated value as angle information or position information.

In FIGS. 2 and 4, one of the inputs of the detected position correction unit 9 is the output signal (rotational position of the electric motor 5) of the position sensor 6, and hence the angular error estimator 22 outputs the output signal of the position sensor 6. Specifically, when the position sensor 6 is an optical encoder, the resolution thereof is 1024 pulses/rotation, and the estimation result of the angular error estimator 22 is 1°, then the angular error estimator 22 outputs, as position information, a pulse count of three, corresponding to 1°.

As illustrated in FIGS. 3 and 5, the angular error estimator 22 outputs angle information in a case where one of the inputs of the detected position correction unit 9 is angle information resulting from conversion, by the position computing unit 11, of the rotational position from the position sensor 6.

In a case where the frequency component of the angular error is a plurality of components, as denoted by Expression (1), it suffices to estimate successively the angular errors of respective components, and summate the errors, or to estimate simultaneously the plurality of frequency components. The estimation time can be shortened in simultaneous estimation as compared with that in successive estimation of the angular errors of respective components. For the sake of simplicity, an instance is explained herein where the angular error is formed only from a single frequency component.

It is found that when speed feedback control is performed by the position sensor 6 that includes the periodic angular error uniquely determined in accordance with the rotational position of the electric motor 5, there occurs a current pulsation or a pulsation of the current command value that includes a frequency component of the same order as that of the angular error. Accordingly, the angular error and the error of the rotational position of the electric motor 5 as calculated using the output from the position sensor 6 can be reduced by estimating and correcting the angular error in such a way so as to suppress such current pulsation.

When the electric motor 5 is a permanent magnet synchronous motor, in a case where the position sensor 6 includes a periodic error uniquely determined in accordance with the rotational position of the electric motor 5, the mechanical order of the current pulsation that appears in the phase current, upon execution of frequency analysis of the phase current by the frequency analysis unit 21, is of $P_n \pm N_n$-th order, where $P_n$ denotes the number of pole pairs and $N_n$ denotes the order of the desired frequency.

Accordingly, it is sufficient to perform frequency analysis of at least one-phase current, from among the various phase currents, and to estimate a $(P_n+N_n)$-th or $(P_n-N_n)$-th order angular error, on the basis of a $(P_n+N_n)$-th or $(P_n-N_n)$-th order current. However, there is a possibility that the $(P_n-N_n)$-th order takes on a negative value, and is thus non-existent, in a case where the order $N_n$ of the desired frequency is larger than the number of pole pairs $P_n$ of the electric motor 5. It is therefore preferable to perform frequency analysis of the $(P_n+N_n)$-th order current. Constant-torque and constant-speed operation is preferred when estimating the angular error.

Upon analysis of the frequency of either one of the d-axis current and the q-axis current, by the frequency analysis unit 21, the current pulsation components appearing in the dq-axes have a component that pulsates at the same order as that of the $N_n$-th order, on account of the mechanical $N_n$-th order angular error. The d-axis current exhibits current pulsation analogous to that of angular error, since the q-axis current, being a torque current, revolves on account of magnetic pole offset derived from the angular error. The speed pulsation of the q-axis current becomes, through a speed control system, a pulsation of the current command value. Accordingly, the q-axis current becomes a current pulsation analogous to the angular error that causes the speed pulsation.

Therefore, the angular error estimator 22 may for instance estimate the angular error in such a way so as to minimize the $N_n$-th order current amplitude of the d-axis current or of the q-axis current, obtained through frequency analysis in the frequency analysis unit 21.

When performing frequency analysis using any one of the current command values or any one of the current detection value of the d-axis current or the q-axis current, estimation is performed under a condition where the revolving q-axis current is fixed, i.e. a condition of constant acceleration. In particular, estimation is preferably performed under a condition whereby acceleration is zero, i.e. the electric motor 5 is rotating at constant speed.

In a case where in Embodiment 1 of the present invention the angular error estimator 22 estimates angular error through current frequency analysis, firstly there is estimated a phase shift $\varphi_n$ of the $N_n$-th order with respect to the mechanical angle of the electric motor 5, and next there is estimated an error amplitude $A_n$ of the $N_n$-th order. FIG. 8 illustrates the configuration of the angular error estimator 22.

The grounds for estimating first the phase shift $\varphi_n$ will be explained next. The angular error $\theta_{err}$ and an estimated error $\theta_{est}$ are given by the expressions below.

[Math. 2]

$$\theta_{err} = A_n \sin(N_n \theta_m + \varphi_n)$$

[Math. 3]

$$\theta_{est} = A_{n_est} \sin(N_n \theta_m + \varphi_{n_est})$$

Expression (2) below gives the difference between the angular error $\theta_{err}$ and an estimated error $\theta_{est}$, i.e. gives the angular error after correction of the output of the position sensor 6 by the estimated error $\theta_{est}$.
[Math. 4]

$$\theta_{err} - \theta_{est} = \sqrt{A_n^{\ 2} + A_{n_est}^2 - 2A_n \cdot A_{n_est} \cos\Delta\theta}\ \sin(N_n \theta_m + \varphi') \quad \cdots \ (2)$$

In Expression (2), $\Delta\theta$ is given by the expression below.

[Math. 5]

$$\Delta\theta = \varphi_{n_est} - \varphi_n, \quad \varphi' = \tan^{-1}\left(\frac{A_n \sin\varphi_n - A_{n_est}\sin\varphi_{n_est}}{A_n \cos\varphi_n - A_{n_est}\cos\varphi_{n_est}}\right)$$

Considered herein are: (a) the amplitude of the corrected signal of a time when the estimated phase $\varphi_{est}$ is varied, with the estimated amplitude $A_{n_est}$ set to be constant, and (b) the estimated error of a time when the magnitude $A_n$ of the estimated amplitude is varied, with the estimated phase $\varphi_{n_est}$ set to be constant.

Considering firstly (a) the amplitude of the corrected signal of a time when the estimated phase $\varphi_{est}$ is varied, with the estimated amplitude $A_{n_est}$ set to be constant, the $N_n$-th order angular error amplitude after correction is given by Expression (3), on the basis of Expression (2) above.

[Math. 6]

$$\sqrt{A_n^{\ 2} + A_{n_est}^2 - 2A_n \cdot A_{n_est}\cos\Delta\theta} \quad \cdots \quad (3)$$

In a case where the amplitude estimated value $A_{n_est}$ is constant, the angular error amplitude after correction, as given by Expression (3), varies depending on the estimated phase $\varphi_{est}$, as illustrated in FIG. 9. FIG. 9 reveals that the angular error amplitude after correction becomes minimum when the phase estimated error $\Delta\theta$ is zero.

When the phase estimated error $\Delta\theta$ is zero, specifically, regardless of the value of the amplitude estimated value $A_{n_est}$, the estimated phase and the actual angular deviation match each other, since the amplitude after correction becomes minimum, and $\Delta\theta$ at this time is zero.

When the amplitude after correction is minimum, the current pulsation derived from angular error is minimum as well, and hence the amplitude value by frequency analysis of current is likewise minimum. That is, the estimated phase for which the amplitude value by frequency analysis of current becomes minimum is the true value of angular deviation.

Considering next (b) the estimated error of a time when the magnitude $A_n$ of the estimated amplitude is varied, with the estimated phase $\varphi_{n_est}$ set to be constant, the angular error amplitude after correction in Expression (3) is transformed to yield Expression (4) below.

[Math. 7]

$$\sqrt{A_n^{\ 2} + A_{n_est}^2 - 2A_n \cdot A_{n_est}\cos\Delta\theta} = \sqrt{\left(A_{n_est} - A_n\cos\Delta\theta\right)^2 + A_n^{\ 2}(1-\cos^2\Delta\theta)} \quad \cdots \quad (4)$$

Herein, the phase estimated value is constant, and hence the estimated phase difference $\Delta\theta$ as well takes on a constant value. The angular error amplitude after correction becomes minimum, in Expression (4), when the following expression holds.

[Math. 8]

$$A_{n_est} = A_n \cos\Delta\theta$$

Accordingly, in a case where phase difference $\Delta\theta$=0 does not hold, the estimated amplitude for which the angular error amplitude is minimum, i.e. for which the amplitude value by frequency analysis of current is minimum, does not match the amplitude value of the actual angular error. In a case where, conversely, phase difference $\Delta\theta$=0 holds, the estimated amplitude matches the amplitude value of the actual angular error. Accordingly, the angular error can be accurately estimated by performing first phase estimation, setting then phase difference $\Delta\theta$=0, and performing thereafter amplitude estimation.

The process of the angular error estimator 22 of Embodiment 1 of the present invention will be explained next with reference to the flowchart of FIG. 10.

Firstly, appropriate initial values (predetermined initial values) arbitrarily set are given to the amplitude estimated value $A_{n_est}$ and a phase estimated value $\varphi_{n_est}$, and the electric motor 5 is caused to rotate and frequency analysis is carried out, while performing correction, to obtain the current amplitude of an angular error main component.

Next, the electric motor 5 is caused to rotate and frequency analysis is carried out, while performing correction, by varying the phase estimated value $\varphi_{n_est}$ alone, there is searched a $\varphi_{n_est}$ for which the current amplitude of the angular error main component is minimum, and the result is determined to be the phase estimated value.

Next, the electric motor 5 is caused to rotate and frequency analysis is carried out while performing correction, by varying the amplitude estimated value $A_{n_est}$, with the phase fixed to the phase estimated value $\varphi_{n_est}$ determined in the step above, and there is searched an An est for which the current amplitude of the angular error main component is minimum, and the result is determined to be the amplitude estimated value.

The estimation method by the angular error estimator 22 according to Embodiment 1 of the present invention will be explained next on the basis of a specific example.

In a case where, for instance, the phase estimated value is searched with the initial value of the phase estimated value set to 0°, frequency analysis is carried out first, while performing correction, with the initial value 0° of the phase estimated value. Next, frequency analysis is carried out while performing correction similarly, with the phase estimated value set to 120° and 240°. Herein, the amplitude estimated value $A_{n_est}$ is fixed to an appropriate value arbitrarily set.

An instance will be considered where the true value of the phase difference is $\varphi_n$=38°. Expressing herein as In ($\varphi_{n_est}$) the spatial n-th order current amplitude by angular error that remains after correction by the detected position correction unit 9 using the estimated value $\varphi_{n_est}$, in the present example there holds In(0°)<In (120°)<In (240°), and a result is obtained wherein the frequency analysis result decreases as the estimated error $\Delta\theta$ decreases, regardless of the value of the amplitude estimated value $A_{n_est}$.

Therefore, frequency analysis is further performed by setting, to a new estimated value, a value intermediate between a minimum value and the second smallest estimated value, and the amplitude of the frequency is found out, to search the true value of the phase difference. A comparison with the minimum value In (0°) is then performed setting In (60°), as the intermediate value, to the new estimated value. In the present example there holds In (60°)<In (0°).

By repeating the search thus according to a sequential bisection method, there is obtained In (30°)<In (60°), In (45°)<In (30°), In (37.5°)<In (45°), and the estimated value $\varphi_{n_est}$ gradually approaches $\varphi$n.

In the present example, an instance has been explained where the phase value is estimated in accordance with a bisection method, but the invention can also be used by using some other search algorithm, such as linear search, hill-climbing, tabu search or simulated annealing.

Next, phase estimation is terminated when a below-described termination condition of phase estimation is satisfied, and amplitude estimation is carried out. As in phase estimation, in amplitude estimation as well, an initial value is given to the amplitude estimated value An est, the electric motor 5 is caused to rotate and frequency analysis is carried out while performing correction, and there is searched an amplitude estimated value $A_{n_est}$ such that the current amplitude decreases, to determine the amplitude estimated value $A_{n_est}$ for which amplitude becomes minimum. Herein the phase estimated value is fixed to the value obtained as a result of the above-described search.

In a case where the maximum error of the position sensor 6 is known beforehand, for instance on the basis of specifications, the maximum error may be set as the initial value when performing amplitude estimation, and the search may be performed between the initial value and an amplitude of 0 in accordance with the same method as the above-described method concerning phase.

The termination condition of estimation is determined by the number of trials, the precision of the position sensor, or the amplitude of the current pulsation. If the estimation termination condition is satisfied, the angular error estimator 22 holds the phase estimated value and the amplitude estimated value, and outputs the angular error estimated value according to Expression (1).

The rotation distance over which the electric motor 5 can rotate is limited, for instance, by constraints in the operating range of the mechanical system that is attached to the electric motor 5. If the termination condition is not satisfied, estimation can be continued, until the termination condition is satisfied, by repeating the estimation over a plurality of times. The second and subsequent estimations are performed in this case using, as a respective initial value, the estimated value worked out in a previous estimation.

An instance will be explained next where the angular error correction device for a position sensor according to Embodiment 1 of the present invention is used in an elevator system. The angular error is estimated herein, for instance, upon installation of a traction machine.

After installation of the traction machine, which is an electric motor in an elevator system, an operation is performed for estimating the angular error in a state where a rope is not laid around a sheave, or a state where the rope is laid around the sheave. The angular error is estimated then by causing the traction machine to rotate.

The rotation distance of the traction machine is not restricted in a state where the rope is not laid around the sheave, and hence angular error estimation can be performed continuously until the estimation termination condition described above is satisfied. In a case where the rope is laid around the sheave, by contrast, the rotation distance of the traction machine is constrained by the lifting distance of the elevator, and hence estimation is carried out by repeating a lifting operation over a plurality of times, in particular when the lifting distance is short.

In this case the angular error is estimated only over a zone where the car is moving at constant speed, and not at a zone of acceleration or deceleration. To extend the zone of travel at constant speed, the elevator may be set to operate at a lower speed than the rated speed of the elevator. In order to enhance estimation precision, the travel speed of the elevator when the latter is traveling at constant speed may be modified in such a way so as to increase the amplitude of current pulsation.

An estimation result of angular error corresponding to the magnetic pole position of the traction machine is recorded on a storage medium (for instance, a non-volatile memory). During an ordinary operation, correction is performed by reading, from the storage medium, an angular error estimated value corresponding to the output of the position sensor 6. The information relating to the angular error and that is recorded on the storage medium, as a phase shift and error amplitude of angular error, may be set such that the angular error is worked out, by calculation, on the basis of Expression (1), and may be corrected angle information or corrected position information, according to the magnetic pole position of the traction machine, from a table or the like. A method of correction by calculation, and in which phase information and amplitude information are stored, is preferred herein since information is minimal in that case.

In Embodiment 1, thus, a position sensor detects the rotational position of an electric motor, and includes a periodic error uniquely determined in accordance with the rotational position; a current sensor detects current flowing in the electric motor; using the rotational position of the electric motor, a frequency analysis unit analyzes the frequency of the current detected by the current sensor, and calculates the amplitude of a specific frequency component corresponding to the angular error; an angular error estimator estimates, as an angular error estimated value, the angular error formed from the specific frequency component on the basis of the amplitude calculated by the frequency analysis unit and the rotational position of the electric motor; and using the angular error estimated value, an angular error correction unit corrects the angular error for the rotational position of the electric motor detected by the position sensor.

The angular error estimator estimates an amplitude and a phase of the angular error assuming that the angular error estimated value is represented by a sine wave or a cosine wave as a function of a mechanical angle of the electric motor, firstly, fixes the amplitude of the angular error to a predetermined initial value, corrects the phase of the angular error while varying the phase from a predetermined initial value, selects, as a phase estimated value, a corrected value for which the amplitude of the angular error formed from the specific frequency component is minimum, and terminates phase estimation of the angular error when an estimation termination condition is satisfied, and secondly, fixes the phase of the angular error to the phase estimated value, corrects the amplitude of the angular error while varying the amplitude from a predetermined initial value, selects, as an amplitude estimated value, a corrected value for which the amplitude of the angular error formed from the specific frequency component is minimum, and terminates amplitude estimation of the angular error when an estimation termination condition is satisfied.

It becomes accordingly possible to accurately estimate and correct angular error.

Embodiment 2

In Embodiment 1, an example has been explained wherein to estimate angular error through current frequency analysis, the angular error estimator 22 estimates firstly the phase shift $\varphi_n$, of the $N_n$-th order, with respect to the mechanical angle of the electric motor 5 and subsequently the angular error estimator 22 estimates the error amplitude $A_n$ of the $N_n$-th order.

In Embodiment 2 of the present invention an instance will be explained wherein the angular error estimator 22 estimates angular error using a frequency characteristic relating to the electric motor 5 and determined beforehand. The configuration of the angular error correction device for a position sensor according to Embodiment 2 of the present invention is identical to that of Embodiment 1 described above, and only the function of the angular error estimator 22 is different. Accordingly, an explanation of the device configuration will be omitted herein.

Firstly, a current pulsation arising from the periodic angular error that is uniquely determined in accordance with the rotational position of the electric motor 5 has a frequency characteristic according to the product of the rotational speed in the electric motor 5 and the spatial order Nn, i.e. according to the frequency component of speed error. This frequency characteristic can be expressed in the form of a Bode plot of amplitude of current pulsation that occurs per unit angular error, in accordance with the rotational speed of the electric motor 5, and a phase delay of current pulsation with respect to a mechanical angle $\theta_m$ of the electric motor 5, as illustrated in FIG. 11.

The Bode plot in FIG. 11 varies depending on the mechanical system that transmits the power of the electric motor 5 (represented physically by a spring-mass damper system) and on control constants (response frequency of the speed control system and response frequency of a current control system).

Envisaging herein an instance where the angular error estimator 22 performs angular error estimation under a condition of identical control constant and a fixed mechanical system, if frequency analysis can be performed once by determining beforehand a frequency characteristic, under identical conditions, then the angular error can be worked out on the basis of amplitude information and phase information, being the analysis results of frequency analysis, and on the basis of the frequency characteristic. Preferably, frequency analysis by the frequency analysis unit 21 involves Fourier transform analysis or Fourier series analysis.

In a case where, for instance, the spatial order of the angular error to be corrected is an Nn-th order, and the rotational speed of the electric motor 5 is $\omega_m$ (rad/s), the spatial order Nn-th order current amplitude $I_a$ $(Nn\cdot\omega_m)$ and phase difference $I_\varphi$ $(Nn\cdot\omega_m)$ obtained through frequency analysis, can be expressed as given in Expressions (5) and (6) below where $G_a(\omega)$ denotes the frequency characteristic of amplitude and $G_\varphi(\omega)$ denotes the frequency characteristic of phase difference, using the angular error amplitude $A_n$ and the phase difference $\varphi_n$.

[Math. 9]

$$I_a(Nn\cdot\omega_m)=A_n\cdot G_a(Nn\cdot\omega_m) \quad \cdots \quad (5)$$

[Math. 10]

$$I_\phi(Nn\cdot\omega_m)=\phi_n+G_\phi(Nn\cdot\omega_m) \quad \cdots \quad (6)$$

Accordingly, the angular error amplitude estimated value $A_{n_est}$ and the phase estimated value $\varphi_{n_est}$ of the angular error can be expressed as given in Expressions (7) and (8) below, using the current amplitude $I_a$ $(Nn\cdot\omega_m)$ and the phase difference $I_\varphi(Nn\cdot\omega_m)$.

[Math. 11]

$$A_{n_est}=\frac{I_a(Nn\cdot\omega_m)}{G_a(Nn\cdot\omega_m)} \quad \cdots \quad (7)$$

[Math. 12]

$$\phi_{n_est}=I_\phi(Nn\cdot\omega_m)-G_\phi(Nn\cdot\omega_m) \quad \cdots \quad (8)$$

Thus, by finding out beforehand the frequency characteristic for which the angular error affects the current that is the output of the current sensor 7, the angular error estimator 22 can estimate the amplitude and phase of the angular error, through one-time execution of frequency analysis. This method allows reducing the number of frequency analyses, as compared with the angular error estimation method of Embodiment 1 described above.

The angular error estimator 22 has stored therein, in the form of a table or a function, a frequency characteristic of the electric motor, and estimates the amplitude and phase pertaining to the angular error by referring to the table or through calculation, in the case of a function.

For instance, the frequency characteristic may be found out by newly attaching a detector for calibration position to the electric motor 5, by elucidating the amplitude and phase delay of the current through frequency analysis at that time, including a pseudo-angular error of the Nn-th order spatial order for constant amplitude, in the output of the detector for calibration position, and by varying the rotational speed of the electric motor 5.

Preferably, the frequency characteristic is found out while varying the spatial order Nn, at a constant rotational speed, since the rotational speed of the electric motor 5 is limited. The present invention can be used also when in Embodiment 2 of the present invention the current for which frequency analysis is carried out is a current command value.

The process of the angular error estimation unit 20 according to Embodiment 2 of the present invention will be explained next with reference to the flowchart of FIG. 12.

Firstly, frequency analysis is carried out by the frequency analysis unit 21, and next the amplitude estimated value $A_{n_est}$ and the phase estimated value $\varphi_{n_est}$ are determined by the angular error estimator 22, for instance by referring to a table.

An instance will be explained next where the angular error correction device for a position sensor according to Embodiment 2 of the present invention is used in an elevator system. Firstly, in a case where a control parameter varies for each type of traction machine, which is the electric motor of the elevator system, there are found out the angular error, such as the one illustrated in FIG. 11, and a frequency characteristic of amplitude and phase difference of current, from several traction machines in a state at the time of shipment, for each control parameter.

To measure current and phase amplitude at shipment, the traction machine is caused to rotate, at the time of shipment, and amplitude information on current pulsation and phase information are recorded. Once traction machine installation is complete, the angular error is estimated and corrected on the basis of the amplitude information and phase information on current pulsation measured at shipment, as well as on the basis of the frequency characteristic of amplitude and phase difference of current.

On the other hand, when the measurement is performed after traction machine installation and before a rope is laid around the sheave, the traction machine may be caused to rotate before looping of the rope around the sheave, and the angular error may be estimated on the basis of the amplitude information and phase information on current pulsation, as well as on the basis of the frequency characteristic of amplitude and phase difference of current. The estimation result is recorded on a non-volatile storage medium. During ordinary operation, correction is performed by reading, from the storage medium, the estimated value of the angular error corresponding to the output of the position sensor.

In a case where, on the other hand, the measurement is performed after looping of the rope around the sheave, following installation of the traction machine, the angular error may be estimated after looping of the rope around the traction machine. When in this case the control parameters differ for each type of traction machine, firstly there are found out, for each control parameter, an angular error, such as the one illustrated in FIG. 11, and a frequency characteristic of amplitude and phase difference of current, from several traction machines, for inertias of several patterns.

Next, inertias are identified, and the angular error is estimated on the basis of amplitude information and phase information on current pulsation, as well as on the basis of the frequency characteristic of amplitude and phase difference of current for the inertia closest to the identified inertia. The estimation result is recorded on a non-volatile storage medium. During ordinary operation, correction is performed by reading, from the storage medium, the estimated value of the angular error corresponding to the output of the position sensor.

In Embodiment 2, thus, a position sensor detects the rotational position of an electric motor, and includes a periodic error uniquely determined in accordance with the rotational position; a current sensor detects current flowing in the electric motor; using the rotational position of the electric motor, a frequency analysis unit analyzes the frequency of the current detected by the current sensor, and calculates the amplitude of a specific frequency component corresponding to the angular error; an angular error estimator estimates, as an angular error estimated value, the angular error formed from the specific frequency component on the basis of the amplitude calculated by the frequency analysis unit and the rotational position of the electric motor; and using the angular error estimated value, an angular error correction unit corrects the angular error for the rotational position of the electric motor detected by the position sensor.

The angular error estimator estimates an amplitude and a phase of the angular error assuming that the angular error estimated value is represented by a sine wave or a cosine wave as a function of a mechanical angle of the electric motor, and estimates the angular error by associating the amplitude and phase of the specific frequency component, calculated by the frequency analysis unit, with a frequency characteristic which relates to the electric motor and is determined beforehand and for which the angular error affects the current that is the output of the current sensor.

Accordingly, Embodiment 2 provides the same effect as Embodiment 1, and allows moreover reducing the number of frequency analyses.

## Embodiment 3

As in Embodiment 1, updating of the estimated value took place after frequency analysis had been performed, in a case where an amplitude estimated value and phase estimated value having an appropriate initial value were given and the angular error was estimated on the basis of the current amplitude after frequency analysis. Therefore, estimated values could not be updated during frequency analysis. Accordingly, the angular error estimated value could not be modified in real time.

An instance will be explained, in Embodiment 3 of the present invention, where frequency analysis is carried out using a filter having excellent real-time properties; as a result, the angular error estimator 22 can estimate the angular error in real time, by using the control block illustrated in FIG. 13. The configuration of the angular error correction device for a position sensor according to Embodiment 3 of the present invention is identical to that of Embodiment 1 described above, except for the configuration of the angular error estimator 22.

Firstly, the frequency analysis unit 21 extracts a signal of a desired frequency alone, using for instance a band pass filter or a notch filter. Next, the frequency analysis unit 21 calculates the amplitude, or a magnitude equivalent to the amplitude (hereafter, both will be referred to as "amplitude"), of the signal of the extracted frequency.

For instance, the amplitude is calculated by taking, as the amplitude value, a value resulting from smoothing, via low-pass filter, the absolute value of the signal of the extracted frequency, or is calculated in accordance with a computation method that involves working out the average of sums of squares of signals or working out the peak values of signals.

The amplitude and phase of the angular error are estimated on the basis of the computation result of an amplitude computing unit 31 illustrated in FIG. 13. An error amplitude estimator 33 estimates the amplitude of angular error, and an error phase estimator 34 calculates the phase of angular error, using, as inputs, a difference between the computation result of the amplitude computing unit 31 that calculates a current amplitude of the desired frequency, extracted by the frequency analysis unit 21, and the current pulsation command value 32.

The phase estimated value that is estimated by the error phase estimator 34 is added to or subtracted from the value resulting from multiplying the mechanical angle by the spatial order of a known angular error generated by the position sensor 6, and the result is output in the form of a sine wave of unit amplitude, according to a sin-table or the like. The amplitude estimated value that is estimated by the error amplitude estimator 33 is multiplied by a sine wave, being the output of a sin-table, and is output as the angular error estimated value.

In Embodiment 3 of the present invention the amplitude and phase of the angular error cannot be estimated simultaneously, and thus there is selected between phase estimation and amplitude estimation. In phase estimation, specifically, the amplitude is provisionally determined to be a given initial value or an amplitude estimated value, and phase is estimated thereupon, while in amplitude estimation, the phase is provisionally determined to be a given initial value or a phase estimated value, and amplitude is estimated thereupon. In this case, preferably, the foregoing are estimated in the order phase first and amplitude next, as described above.

The error amplitude estimator 33 varies the amplitude that is to be corrected according to time, for instance by PID control, and performs control so that the current amplitude after frequency analysis matches a current pulsation command value 15. Herein, control can be performed so that the current pulsation after frequency analysis is zero, i.e. so that the error amplitude takes on a true value, by setting the value of the current pulsation command value 15 to zero.

In a case where for any reason, for instance due to computational error, the current pulsation cannot be made zero, the error amplitude estimator 33 estimates the amplitude by modifying the amplitude of the angular error in such a manner that current amplitude becomes minimal.

Similarly, the error phase estimator 34 as well varies the phase that is to be corrected according to time, for instance by PID control, and modifies the phase of angular error, in such a manner that the amplitude after frequency analysis matches the current pulsation command value 15, or in such a manner that the current amplitude becomes minimal, to estimate the amplitude.

In Embodiment 3 of the present invention, frequency analysis can be performed in real time, and the angular error can be estimated and corrected in real time. Accordingly, angular error can be estimated even in the absence of an operation mode for estimating the angular error. In order to estimate angular error in real time, preferred herein is a travel condition such that the frequency, amplitude and phase of current pulsation are stable, i.e. a constant speed operation is preferable.

An estimation method of angular error according to Embodiment 3 of the present invention can be used also in both Embodiments 1 and 2 described above. Specifically, the amplitude estimated value or phase estimated value, or the amplitude estimated value and the phase estimated value, of the angular error are estimated, in accordance with the methods in Embodiments 1 and 2 described above, and are recorded. During ordinary travel, the recorded estimated values are read, and the angular error according to the rotational position is corrected.

The estimation method of the amplitude and phase of the angular error, and the frequency analysis method, may be a combination of the methods of Embodiments 1 to 3 of the present invention.

In Embodiment 3, thus, a position sensor detects the rotational position of an electric motor, and includes a periodic error uniquely determined in accordance with the rotational position; a current sensor detects current flowing in the electric motor; using the rotational position of the electric motor, a frequency analysis unit analyzes the frequency of the current detected by the current sensor, and calculates the amplitude of a specific frequency component corresponding to the angular error. An angular error estimator estimates, as an angular error estimated value, the angular error formed from the specific frequency component on the basis of the amplitude calculated by the frequency analysis unit and the rotational position of the electric motor; and using the angular error estimated value, an angular error correction unit corrects the angular error for the rotational position of the electric motor detected by the position sensor.

Further, the angular error estimator estimates an amplitude and a phase of the angular error assuming that the angular error estimated value is represented by a sine wave or a cosine wave as a function of a mechanical angle of the electric motor, and includes: an error amplitude estimation unit that finds out, from the output of the current sensor, an amplitude of current pulsation of the specific frequency calculated by the frequency analysis unit, varies the amplitude of the specific frequency with time while correcting the angle, and sets, as an amplitude estimated value of the angular error, a value at a time when the amplitude calculated by the frequency analysis unit is minimum; and an error phase estimation unit that finds out, from the output of the current sensor, an amplitude of current pulsation of the specific frequency calculated by the frequency analysis unit, varies the phase of the specific frequency with time while correcting the angle, and sets, as a phase estimated value of the angular error, a value at a time when the amplitude calculated by the frequency analysis unit is minimum.

Accordingly, Embodiment 3 provides the same effect as Embodiment 1 or Embodiment 2 above, and allows varying an angular error estimated value in real time.

of the elevator system, there are found out the angular error, such as the one illustrated in FIG. 11, and a frequency characteristic of amplitude and phase difference of current, from several traction machines in a state at the time of shipment, for each control parameter.

To measure current and phase amplitude at shipment, the traction machine is caused to rotate, at the time of shipment, and amplitude information on current pulsation and phase information are recorded. Once traction machine installation is complete, the angular error is estimated and corrected on the basis of the amplitude information and phase information on current pulsation measured at shipment, as well as on the basis of the frequency characteristic of amplitude and phase difference of current.

On the other hand, when the measurement is performed after traction machine installation and before a rope is laid around the sheave, the traction machine may be caused to rotate before looping of the rope around the sheave, and the angular error may be estimated on the basis of the amplitude information and phase information on current pulsation, as well as on the basis of the frequency characteristic of amplitude and phase difference of current. The estimation result is recorded on a non-volatile storage medium. During ordinary operation, correction is performed by reading, from the storage medium, the estimated value of the angular error corresponding to the output of the position sensor.

In a case where, on the other hand, the measurement is performed after looping of the rope around the sheave, following installation of the traction machine, the angular error may be estimated after looping of the rope around the traction machine. When in this case the control parameters differ for each type of traction machine, firstly there are found out, for each control parameter, an angular error, such as the one illustrated in FIG. 11, and a frequency characteristic of amplitude and phase difference of current, from several traction machines, for inertias of several patterns.

Next, inertias are identified, and the angular error is estimated on the basis of amplitude information and phase information on current pulsation, as well as on the basis of the frequency characteristic of amplitude and phase difference of current for the inertia closest to the identified inertia. The estimation result is recorded on a non-volatile storage medium. During ordinary operation, correction is performed by reading, from the storage medium, the estimated value of the angular error corresponding to the output of the position sensor.

In Embodiment 2, thus, a position sensor detects the rotational position of an electric motor, and includes a periodic error uniquely determined in accordance with the rotational position; a current sensor detects current flowing in the electric motor; using the rotational position of the electric motor, a frequency analysis unit analyzes the frequency of the current detected by the current sensor, and calculates the amplitude of a specific frequency component corresponding to the angular error; an angular error estimator estimates, as an angular error estimated value, the angular error formed from the specific frequency component on the basis of the amplitude calculated by the frequency analysis unit and the rotational position of the electric motor; and using the angular error estimated value, an angular error correction unit corrects the angular error for the rotational position of the electric motor detected by the position sensor.

The angular error estimator estimates an amplitude and a phase of the angular error assuming that the angular error estimated value is represented by a sine wave or a cosine wave as a function of a mechanical angle of the electric motor, and estimates the angular error by associating the amplitude and phase of the specific frequency component, calculated by the frequency analysis unit, with a frequency characteristic which relates to the electric motor and is determined beforehand and for which the angular error affects the current that is the output of the current sensor.

Accordingly, Embodiment 2 provides the same effect as Embodiment 1, and allows moreover reducing the number of frequency analyses.

Embodiment 3

As in Embodiment 1, updating of the estimated value took place after frequency analysis had been performed, in a case where an amplitude estimated value and phase estimated value having an appropriate initial value were given and the angular error was estimated on the basis of the current amplitude after frequency analysis. Therefore, estimated values could not be updated during frequency analysis. Accordingly, the angular error estimated value could not be modified in real time.

An instance will be explained, in Embodiment 3 of the present invention, where frequency analysis is carried out using a filter having excellent real-time properties; as a result, the angular error estimator 22 can estimate the angular error in real time, by using the control block illustrated in FIG. 13. The configuration of the angular error correction device for a position sensor according to Embodiment 3 of the present invention is identical to that of Embodiment 1 described above, except for the configuration of the angular error estimator 22.

Firstly, the frequency analysis unit 21 extracts a signal of a desired frequency alone, using for instance a band pass filter or a notch filter. Next, the frequency analysis unit 21 calculates the amplitude, or a magnitude equivalent to the amplitude (hereafter, both will be referred to as "amplitude"), of the signal of the extracted frequency.

For instance, the amplitude is calculated by taking, as the amplitude value, a value resulting from smoothing, via low-pass filter, the absolute value of the signal of the extracted frequency, or is calculated in accordance with a computation method that involves working out the average of sums of squares of signals or working out the peak values of signals.

The amplitude and phase of the angular error are estimated on the basis of the computation result of an amplitude computing unit 31 illustrated in FIG. 13. An error amplitude estimator 33 estimates the amplitude of angular error, and an error phase estimator 34 calculates the phase of angular error, using, as inputs, a difference between the computation result of the amplitude computing unit 31 that calculates a current amplitude of the desired frequency, extracted by the frequency analysis unit 21, and the current pulsation command value 32.

The phase estimated value that is estimated by the error phase estimator 34 is added to or subtracted from the value resulting from multiplying the mechanical angle by the spatial order of a known angular error generated by the position sensor 6, and the result is output in the form of a sine wave of unit amplitude, according to a sin-table or the like. The amplitude estimated value that is estimated by the error amplitude estimator 33 is multiplied by a sine wave, being the output of a sin-table, and is output as the angular error estimated value.

In Embodiment 3 of the present invention the amplitude and phase of the angular error cannot be estimated simultaneously, and thus there is selected between phase estimation and amplitude estimation. In phase estimation, specifically, the amplitude is provisionally determined to be a given initial value or an amplitude estimated value, and phase is estimated thereupon, while in amplitude estimation, the phase is provisionally determined to be a given initial value or a phase estimated value, and amplitude is estimated thereupon. In this case, preferably, the foregoing are estimated in the order phase first and amplitude next, as described above.

The error amplitude estimator 33 varies the amplitude that is to be corrected according to time, for instance by PID control, and performs control so that the current amplitude after frequency analysis matches a current pulsation command value 15. Herein, control can be performed so that the current pulsation after frequency analysis is zero, i.e. so that the error amplitude takes on a true value, by setting the value of the current pulsation command value 15 to zero.

In a case where for any reason, for instance due to computational error, the current pulsation cannot be made zero, the error amplitude estimator 33 estimates the amplitude by modifying the amplitude of the angular error in such a manner that current amplitude becomes minimal.

Similarly, the error phase estimator 34 as well varies the phase that is to be corrected according to time, for instance by PID control, and modifies the phase of angular error, in such a manner that the amplitude after frequency analysis matches the current pulsation command value 15, or in such a manner that the current amplitude becomes minimal, to estimate the amplitude.

In Embodiment 3 of the present invention, frequency analysis can be performed in real time, and the angular error can be estimated and corrected in real time. Accordingly, angular error can be estimated even in the absence of an operation mode for estimating the angular error. In order to estimate angular error in real time, preferred herein is a travel condition such that the frequency, amplitude and phase of current pulsation are stable, i.e. a constant speed operation is preferable.

An estimation method of angular error according to Embodiment 3 of the present invention can be used also in both Embodiments 1 and 2 described above. Specifically, the amplitude estimated value or phase estimated value, or the amplitude estimated value and the phase estimated value, of the angular error are estimated, in accordance with the methods in Embodiments 1 and 2 described above, and are recorded. During ordinary travel, the recorded estimated values are read, and the angular error according to the rotational position is corrected.

The estimation method of the amplitude and phase of the angular error, and the frequency analysis method, may be a combination of the methods of Embodiments 1 to 3 of the present invention.

In Embodiment 3, thus, a position sensor detects the rotational position of an electric motor, and includes a periodic error uniquely determined in accordance with the rotational position; a current sensor detects current flowing in the electric motor; using the rotational position of the electric motor, a frequency analysis unit analyzes the frequency of the current detected by the current sensor, and calculates the amplitude of a specific frequency component corresponding to the angular error. An angular error estimator estimates, as an angular error estimated value, the angular error formed from the specific frequency component on the basis of the amplitude calculated by the frequency analysis unit and the rotational position of the electric motor; and using the angular error estimated value, an angular error correction unit corrects the angular error for the rotational position of the electric motor detected by the position sensor.

Further, the angular error estimator estimates an amplitude and a phase of the angular error assuming that the angular error estimated value is represented by a sine wave or a cosine wave as a function of a mechanical angle of the electric motor, and includes: an error amplitude estimation unit that finds out, from the output of the current sensor, an amplitude of current pulsation of the specific frequency calculated by the frequency analysis unit, varies the amplitude of the specific frequency with time while correcting the angle, and sets, as an amplitude estimated value of the angular error, a value at a time when the amplitude calculated by the frequency analysis unit is minimum; and an error phase estimation unit that finds out, from the output of the current sensor, an amplitude of current pulsation of the specific frequency calculated by the frequency analysis unit, varies the phase of the specific frequency with time while correcting the angle, and sets, as a phase estimated value of the angular error, a value at a time when the amplitude calculated by the frequency analysis unit is minimum.

Accordingly, Embodiment 3 provides the same effect as Embodiment 1 or Embodiment 2 above, and allows varying an angular error estimated value in real time.

## Claims

1. An angular error correction device for correcting an angular error of a position sensor (6), wherein the position sensor (6) is configured to detect a rotational position of an electric motor (5) and includes a periodic error that is uniquely determined in accordance with the rotational position, wherein a frequency component of the angular error is known, the angular error correction device comprising:

   a current sensor (7) that is configured to detect current flowing in the electric motor (5);
   a frequency analysis unit (21) that is configured to analyze, using the rotational position of the electric motor (5), the frequency of the current detected by the current sensor (7) when speed feedback control is performed by the position sensor (6), and to calculate an amplitude of a specific frequency component corresponding to the frequency component of the angular error;
   an angular error estimator (22) that is configured to estimate, as an angular error estimated value, the angular error formed from the specific frequency component on the basis of a relationship between the angular error and a current pulsation, with the input of the amplitude calculated by the frequency analysis unit (21) and the rotational position of the electric motor (5); and
   an angular error correction unit that is configured to correct, using the angular error estimated value, the angular error for the rotational position of the electric motor (5) detected by the position sensor (6).

2. The angular error correction device according to claim 1,
   wherein the angular error estimator (22) is configured to:

   estimate an amplitude and a phase of the angular error assuming that the angular error estimated value is represented by a sine wave or a cosine wave as a function of a mechanical angle of the electric motor (5),
   firstly, fix the amplitude of the angular error to a predetermined initial value, correct the phase of the angular error while varying the phase from a predetermined initial value, select, as a phase estimated value, a corrected value for which the amplitude of the angular error formed from the specific frequency component is minimum, and terminate phase estimation of the angular error when an estimation termination condition is satisfied, and
   secondly, fix the phase of the angular error to the phase estimated value, correct the amplitude of the angular error while varying the amplitude from a predetermined initial value, select, as an amplitude estimated value, a corrected value for which the amplitude of the angular error formed from the specific frequency component is minimum, and terminate amplitude estimation of the angular error when an estimation termination condition is satisfied.

3. The angular error correction device according to claim 1,
   wherein the angular error estimator (22) is configured to:

   estimate an amplitude and a phase of the angular error assuming that the angular error estimated value is represented by a sine wave or a cosine wave as a function of a mechanical angle of the electric motor (5), and
   estimate the angular error by associating the amplitude and phase of the specific frequency component, calculated by the frequency analysis unit (21), with a frequency characteristic which relates to the electric motor (5) and is determined beforehand and for which the angular error affects the current that is the output of the current sensor (7).

4. The angular error correction device according to any one of claims 1 to 3,
   wherein the angular error estimator (22) is configured to estimate an amplitude and a phase of the angular error assuming that the angular error estimated value is represented by a sine wave or a cosine wave as a function of a mechanical angle of the electric motor (5), and
   wherein the angular error estimator (22) includes:

   an error amplitude estimation unit that is configured to find out, from the output of the current sensor (7), an amplitude of current pulsation of the specific frequency calculated by the frequency analysis unit (21), vary the amplitude of the specific frequency with time while correcting the angle, and set, as an amplitude estimated value of the angular error, a value at a time when the amplitude calculated by the frequency analysis unit (21) is minimum; and
   an error phase estimation unit that is configured to find out, from the output of the current sensor (7), an amplitude of current pulsation of the specific frequency calculated by the frequency analysis unit (21), vary the phase of the specific frequency with time while correcting the angle, and set, as a phase estimated value of the angular error, a value at a time when the amplitude calculated by the frequency analysis unit (21) is minimum.

**5.** The angular error correction device according to any one of claims 1 to 4,
wherein the angular error estimator (22) is configured to estimate the angular error in a case where a speed command value for the electric motor (5) is constant.

**6.** The angular error correction device according to any one of claims 1 to 5,
wherein the angular error estimator (22) is configured to estimate the angular error in a case where acceleration of the electric motor (5) is constant.

**7.** The angular error correction device according to any one of claims 1 to 6,
wherein the frequency analysis unit (21) is configured to perform a Fourier transform, a Fourier series expansion, or a fast Fourier transform.

**8.** The angular error correction device according to any one of claims 1 to 6,
wherein the frequency analysis unit (21) includes a band pass filter that lets through only the specific frequency, and wherein the frequency analysis unit (21) is configured to perform amplitude computation and phase computation, or amplitude computation alone, on an output current of the band pass filter.

**9.** The angular error correction device according to any one of claims 1 to 8, further comprising:

a coordinate converter (12) that is configured to convert a phase current of the electric motor (5), detected by the current sensor (7), to an axis current of the electric motor (5),
wherein the frequency analysis unit (21) is configured to analyze the frequency of the axis current of the electric motor (5) .

**10.** The angular error correction device according to claim 9,
wherein the coordinate converter (12) is configured to convert the phase current of the electric motor (5), detected by the current sensor (7), to d-q axes coordinates, and
wherein the frequency analysis unit (21) is configured to analyze the frequency of either one of a d-axis current and a q-axis current, resulting from conversion by the coordinate converter (12).

**11.** A method for correcting an angular error of a position sensor, the method being executed by an angular error correction device, wherein the position sensor (6) detects a rotational position of an electric motor (5) and includes a periodic error that is uniquely determined in accordance with the rotational position, wherein a frequency component of the angular error is known, the method comprising:

a current detection step of detecting current flowing in the electric motor (5);
a frequency analysis step of, using the rotational position of the electric motor (5), analyzing the frequency of the current detected in the current detection step when speed feedback control is performed by the position sensor (6), and calculating an amplitude of a specific frequency component corresponding to the frequency component of the angular error;
an angular error estimation step of estimating, as an angular error estimated value, the angular error formed from the specific frequency component on the basis of a relationship between the angular error and a current pulsation, with the input of the amplitude calculated in the frequency analysis step and the rotational position of the electric motor (5); and
an angular error correction step of, using the angular error estimated value, correcting the angular error for the rotational position of the electric motor (5) detected by the position sensor (6) .

## Patentansprüche

**1.** Winkelfehlerkorrektureinrichtung zum Korrigieren eines Winkelfehlers eines Positionssensors (6), wobei der Positionssensor (6) dazu konfiguriert ist, eine Rotationsposition eines Elektromotors (5) zu detektieren und einen periodischen Fehler aufweist, der einzeln gemäß der Rotationsposition bestimmt wird, wobei eine Frequenzkomponente des Winkelfehlers bekannt ist, wobei die Winkelfehlerkorrektureinrichtung aufweist:

einen Stromsensor (7), der dazu konfiguriert ist, einen Strom zum Detektieren, der in dem Elektromotor (5) fließt;

eine Frequenzanalyseeinheit (21), die dazu konfiguriert ist, unter Nutzung der Rotationsposition des Elektromotors (5), die Frequenz des durch den Stromsensor (7) detektierten Stroms zu analysieren, wenn eine Geschwindigkeitsrückkopplungssteuerung von dem Positionssensor (6) durchgeführt wird, und eine Amplitude einer spezifischen Frequenzkomponente entsprechend der Frequenzkomponente des Winkelfehlers zu berechnen;
einem Winkelfehlerabschätzer (22), der dazu konfiguriert ist, als einen Winkelfehlerschätzwert, den Winkelfehler, der von der spezifischen Frequenzkomponente gebildet wird, auf der Basis eines Verhältnisses zwischen dem Winkelfehler und einer Strompulsierung abzuschätzen, mit der Eingabe der Amplitude, die durch die Frequenzanalyseeinheit (21) berechnet ist, und der Rotationsposition des Elektromotors (5); und
eine Winkelfehlerkorrektureinheit, die dazu konfiguriert ist, unter Nutzung des Winkelfehlerschätzwerts, den Winkelfehler für die Rotationsposition des Elektromotors (5) zu korrigieren, die durch den Positionssensor (6) detektiert ist.

**2.** Winkelfehlerkorrektureinrichtung nach Anspruch 1,
wobei der Winkelfehlerabschätzer (22) konfiguriert ist zu:

einer Amplitude und eine Phase des Winkelfehlers abzuschätzen unter der Annahme, dass der Winkelfehlerschätzwert repräsentiert wird durch eine Sinuswelle oder eine Cosinuswelle als einer Funktion eines mechanischen Winkels des Elektromotors (5),
erstens, die Amplitude des Winkelfehlers auf einen vorbestimmten Ausgangswert festzulegen, die Phase des Winkelfehlers zu korrigieren, während die Phase von einem vorbestimmten Ausgangswert variiert wird, auszuwählen als ein Phasenschätzwert, eines korrigierten Werts, für den die Amplitude des Winkelfehlers, der aus der spezifischen Frequenzkomponente gebildet ist, minimal ist, und eine Phasenabschätzung des Winkelfehlers zu beenden, wenn eine Schätzbeendigungsbedingung erfüllt ist, und
zweitens die Phase des Winkelfehlers auf den Phasenschätzwert festzusetzen, die Amplitude des Winkelfehlers zu korrigieren, während die Amplitude von einem vorbestimmten Ausgangswert variiert, auszuwählen als ein Amplitudenschätzwert, eines korrigierten Werts für den die Amplitude des Winkelfehlers, der aus der spezifischen Frequenzkomponente gebildet wird, minimal ist, und einer Amplitudenabschätzung des Winkelfehlers zu beenden, wenn eine Schätzbeendigungsbedingung erfüllt ist.

**3.** Winkelfehlerkorrektureinrichtung nach Anspruch 1,
wobei der Winkelfehlerabschätzer (22) konfiguriert ist zu:

Schätzen eine Amplitude und einer Phase des Winkelfehlers unter der Annahme, dass der Winkelfehlerschätzwert repräsentiert wird durch eine Sinuswelle oder eine Cosinuswelle als einer Funktion eines mechanischen Winkels des Elektromotors (5), und
Schätzen des Winkelfehlers durch Zuordnen der Amplitude und der Phase der spezifischen Frequenzkomponente, Berechnen durch die Frequenzanalyseeinheit (21), zu einer Frequenzcharakteristik, die sich auf den Elektromotor (5) bezieht und im Vorhinein bestimmt ist und für die der Winkelfehler den Strom beeinflusst, der der Ausgang des Stromsensors (7) ist.

**4.** Winkelfehlerkorrektureinrichtung nach einem der Ansprüche 1 bis 3,
wobei der Winkelfehlerabschätzer (22) dazu konfiguriert ist, einer Amplitude und eine Phase des Winkelfehlers unter der Annahme abzuschätzen, dass der Winkelfehlerschätzwert repräsentiert wird durch eine Sinuswelle oder eine Cosinuswelle als eine Funktion eines mechanischen Winkels des Elektromotors (5), und
wobei der Winkelfehlerabschätzer (22) aufweist:

eine Fehleramplitudenschätzeinheit, die dazu konfiguriert ist, herauszufinden, von der Ausgang des Stromsensors (7), eine Amplitude einer Strompulsierung von der spezifischen Frequenz, die durch die Frequenzanalyseeinheit (21) berechnet ist, die Amplitude der spezifischen Frequenz über die Zeit zu variieren, während der Winkel korrigier wird, und, als ein Amplitudenschätzwert des Winkelfehlers einen Wert zu einer Zeit festzusetzen, wenn die durch die Frequenzanalyseeinheit (21) berechnete Amplitude minimal ist; und
eine Fehlerphasenschätzeinheit, die dazu konfiguriert ist, herauszufinden, von der Ausgang des Stromsensors (7) eine Amplitude der Strompulsierung der spezifischen Frequenz, die durch die Frequenzanalyseeinheit (21) berechnet ist, die Phase der spezifischen Frequenz über die Zeit zu variieren, während der Winkel korrigiert wird, und festzusetzen, als ein Phasenschätzwert des Winkelfehlers, eines Werts zu einer Zeit, wenn die Amplitude, die durch die Frequenzanalyseeinheit (21) berechnet ist, minimal ist.

5. Winkelfehlerkorrektureinrichtung nach einem der Ansprüche 1 bis 4,
wobei der Winkelfehlerabschätzer (22) dazu konfiguriert ist, den Winkelfehler in einem Fall abzuschätzen, wo ein Geschwindigkeitsbefehlswert für den Elektromotor (5) konstant ist.

6. Winkelfehlerkorrektureinrichtung nach einem der Ansprüche 1 bis 5,
wobei der Winkelfehlerabschätzer (22) dazu konfiguriert ist, den Winkelfehler in einem Fall abzuschätzen, wo eine Beschleunigung des Elektromotors (5) konstant ist.

7. Winkelfehlerkorrektureinrichtung nach einem der Ansprüche 1 bis 6,
wobei die Frequenzanalyseeinheit (21) dazu konfiguriert ist, eine Fourier-Transformation, eine Fourierreihenentwicklung oder eine Fast-Fourier-Transformation durchzuführen.

8. Winkelfehlerkorrektureinrichtung nach einem der Ansprüche 1 bis 6,
wobei die Frequenzanalyseeinheit (21) ein Bandpassfilter aufweist, der nur die spezifischen Frequenz durchlässt, und
wobei die Frequenzanalyseeinheit (21) dazu konfiguriert ist, eine Amplitudenberechnung und Phasenberechnung durchzuführen, oder nur eine Amplitudenberechnung durchzuführen, an einem Ausgangsstrom des Bandpassfilters.

9. Winkelfehlerkorrektureinrichtung nach einem der Ansprüche 1 bis 8, des Weiteren mit:

   einem Koordinatenwandler (12), der dazu konfiguriert ist, ein Phasenstrom des Elektromotors (5), der durch den Stromsensor (7) detektiert ist, zu einem Achsenstrom des Elektromotors (5) zu wandeln,
   wobei die Frequenzanalyseeinheit (21) dazu konfiguriert ist, die Frequenz des Achsenstroms des Elektromotors (5) zu analysieren.

10. Winkelfehlerkorrektureinrichtung nach Anspruch 9,
wobei der Koordinatenwandler (12) dazu konfiguriert ist, den Phasenstrom des Elektromotors (5), der durch den Stromsensor (7) detektiert ist, zu d-q-Achsenkoordinaten zu wandeln, und
wobei die Frequenzanalyseeinheit (21) dazu konfiguriert ist, die Frequenz von entweder einem von einem d-Achsenstrom und einem q-Achsenstrom zu analysieren, der von der Wandlung durch den Koordinatenwandler (12) resultiert.

11. Verfahren zum Korrigieren eines Winkelfehlers eines Positionssensors, wobei das Verfahren durch eine Winkelfehlerkorrektureinrichtung durchgeführt wird, wobei der Positionssensor (6) eine Rotationsposition eines Elektromotors (5) detektiert und einen periodischen Fehler aufweist, der einzeln gemäß der Rotationsposition bestimmt wird, wobei eine Frequenzkomponente des Winkelfehlers bekannt ist, wobei das Verfahren Folgendes aufweist:

   einen Winkelfehlerdetektionsschritt zum Detektieren eines in dem Elektromotor (5) fließenden Stroms;
   einen Frequenzanalyseschritt des, unter Nutzung der Rotationsposition des Elektromotors (5), Analysieren der Frequenz des Stroms, der in dem Stromdetektionsschritt detektiert ist, wenn eine Geschwindigkeitsrückkopplungssteuerung von dem Positionssensor (6) durchgeführt wird, und Berechnen eine Amplitude einer spezifischen Frequenzkomponente entsprechend der Frequenzkomponente des Winkelfehlers;
   ein Winkelfehlerabschätzschritt des Abschätzens als einen Winkelfehlerschätzwert, des Winkelfehlers, der von der spezifischen Frequenzkomponente ausgebildet wird, auf der Basis eines Verhältnisses zwischen dem Winkelfehler und einer Strompulsierung, mit der Eingabe der Amplitude, die in dem Frequenzanalyseschritt berechnet ist, und der Rotationsposition des Elektromotors (5); und
   einem Winkelfehlerkorrekturschritt des, unter Nutzung des Winkelfehlerschätzwerts, Korrigieren des Winkelfehlers für die Rotationsposition des Elektromotors (5), die durch den Positionssensor (6) detektiert ist.

## Revendications

1. Dispositif de correction d’erreur angulaire pour corriger l’erreur angulaire d’un capteur de position (6), où le capteur de position (6) est configuré pour détecter une position de rotation d’un moteur électrique (5) et comprend une erreur périodique qui est déterminée de manière unique en fonction de la position de rotation, où une composante de fréquence de l’erreur angulaire est connue, le dispositif de correction d’erreur angulaire comprenant :

   un capteur de courant (7) qui est configuré pour détecter le courant circulant dans le moteur électrique (5) ;

une unité d'analyse de fréquence (21) qui est configurée pour analyser, en utilisant la position de rotation du moteur électrique (5), la fréquence du courant détecté par le capteur de courant (7) lorsque le contrôle de rétroaction de vitesse est effectué par le capteur de position (6), et pour calculer une amplitude d'une composante de fréquence spécifique correspondant à la composante de fréquence de l'erreur angulaire ;
un estimateur d'erreur angulaire (22) qui est configuré pour estimer, en tant que valeur estimée de l'erreur angulaire, l'erreur angulaire formée à partir de la composante de fréquence spécifique sur la base d'une relation entre l'erreur angulaire et une pulsation de courant, avec l'entrée de l'amplitude étant calculée par l'unité d'analyse de fréquence (21) et la position de rotation du moteur électrique (5) ; et
une unité de correction d'erreur angulaire qui est configurée pour corriger, en utilisant la valeur estimée de l'erreur angulaire, l'erreur angulaire pour la position de rotation du moteur électrique (5) détectée par le capteur de position (6).

**2.** Dispositif de correction d'erreur angulaire selon la revendication 1,
dans lequel l'estimateur d'erreur angulaire (22) est configuré pour :

estimer une amplitude et une phase de l'erreur angulaire en supposant que la valeur estimée de l'erreur angulaire est représentée par une onde sinus ou une onde cosinus en fonction d'un angle mécanique du moteur électrique (5),
en premier lieu, fixer l'amplitude de l'erreur angulaire à une valeur initiale prédéterminée, corriger la phase de l'erreur angulaire tout en faisant varier la phase à partir d'une valeur initiale prédéterminée, sélectionner, comme valeur estimée de la phase, une valeur corrigée pour laquelle l'amplitude de l'erreur angulaire formée à partir de la composante de fréquence spécifique est minimale, et mettre fin à l'estimation de la phase de l'erreur angulaire lorsqu'une condition de fin d'estimation est satisfaite, et
en second lieu, fixer la phase de l'erreur angulaire à la valeur estimée de la phase, corriger l'amplitude de l'erreur angulaire tout en faisant varier l'amplitude à partir d'une valeur initiale prédéterminée, sélectionner, comme valeur estimée de l'amplitude, une valeur corrigée pour laquelle l'amplitude de l'erreur angulaire formée à partir de la composante de fréquence spécifique est minimale, et mettre fin à l'estimation de l'amplitude de l'erreur angulaire lorsqu'une condition de fin d'estimation est satisfaite.

**3.** Dispositif de correction d'erreur angulaire selon la revendication 1,
dans lequel l'estimateur d'erreur angulaire (22) est configuré pour :

estimer une amplitude et une phase de l'erreur angulaire en supposant que la valeur estimée de l'erreur angulaire est représentée par une onde sinus ou une onde cosinus en fonction d'un angle mécanique du moteur électrique (5), et
estimer l'erreur angulaire en associant l'amplitude et la phase de la composante de fréquence spécifique, calculée par l'unité d'analyse de fréquence (21), avec une caractéristique de fréquence qui se rapporte au moteur électrique (5) et qui est déterminée au préalable et pour laquelle l'erreur angulaire affecte le courant qui est la sortie du capteur de courant (7).

**4.** Dispositif de correction d'erreur angulaire selon l'une quelconque des revendications 1 à 3,
dans lequel l'estimateur d'erreur angulaire (22) est configuré pour estimer une amplitude et une phase de l'erreur angulaire en supposant que la valeur estimée de l'erreur angulaire est représentée par une onde sinus ou une onde cosinus en fonction d'un angle mécanique du moteur électrique (5), et
où l'estimateur d'erreur angulaire (22) comprend :

une unité d'estimation d'amplitude d'erreur qui est configurée pour trouver, à partir de la sortie du capteur de courant (7), une amplitude de pulsation de courant de la fréquence spécifique calculée par l'unité d'analyse de fréquence (21), pour faire varier l'amplitude de la fréquence spécifique avec le temps tout en corrigeant l'angle, et pour fixer, comme valeur estimée de l'amplitude de l'erreur angulaire, une valeur à un moment où l'amplitude calculée par l'unité d'analyse de fréquence (21) est minimale ; et
une unité d'estimation de phase d'erreur qui est configurée pour trouver, à partir de la sortie du capteur de courant (7), une amplitude de pulsation de courant de la fréquence spécifique calculée par l'unité d'analyse de fréquence (21), pour faire varier la phase de la fréquence spécifique dans le temps tout en corrigeant l'angle, et pour fixer, comme valeur estimée de la phase de l'erreur angulaire, une valeur à un moment où l'amplitude calculée par l'unité d'analyse de fréquence (21) est minimale.

**5.** Dispositif de correction d'erreur angulaire selon l'une quelconque des revendications 1 à 4,

dans lequel l'estimateur d'erreur angulaire (22) est configuré pour estimer l'erreur angulaire dans le cas où une valeur de commande de vitesse pour le moteur électrique (5) est constante.

**6.** Dispositif de correction d'erreur angulaire selon l'une quelconque des revendications 1 à 5, dans lequel l'estimateur d'erreur angulaire (22) est configuré pour estimer l'erreur angulaire dans le cas où l'accélération du moteur électrique (5) est constante.

**7.** Dispositif de correction d'erreur angulaire selon l'une quelconque des revendications 1 à 6, dans lequel l'unité d'analyse de fréquence (21) est configurée pour effectuer une transformée de Fourier, un développement en séries de Fourier ou une transformée de Fourier rapide.

**8.** Dispositif de correction d'erreur angulaire selon l'une quelconque des revendications 1 à 6, dans lequel l'unité d'analyse de fréquence (21) comprend un filtre passe-bande qui laisse passer uniquement la fréquence spécifique, et dans lequel l'unité d'analyse de fréquence (21) est configurée pour effectuer un calcul d'amplitude et un calcul de phase, ou un calcul d'amplitude seul, sur un courant de sortie du filtre passe-bande.

**9.** Dispositif de correction d'erreur angulaire selon l'une quelconque des revendications 1 à 8, comprenant en outre :

un convertisseur de coordonnées (12) qui est configuré pour convertir un courant de phase du moteur électrique (5), détecté par le capteur de courant (7), en un courant d'axe du moteur électrique (5), où l'unité d'analyse de fréquence (21) est configurée pour analyser la fréquence du courant d'axe du moteur électrique (5).

**10.** Dispositif de correction d'erreur angulaire selon la revendication 9, dans lequel le convertisseur de coordonnées (12) est configuré pour convertir le courant de phase du moteur électrique (5), détecté par le capteur de courant (7), en coordonnées d'axes d-q, et dans lequel l'unité d'analyse de fréquence (21) est configurée pour analyser la fréquence de l'un ou l'autre d'un courant d'axe d et d'un courant d'axe q, résultant de la conversion par le convertisseur de coordonnées (12).

**11.** Procédé de correction d'erreur angulaire d'un capteur de position, le procédé étant exécuté par un dispositif de correction d'erreur angulaire, dans lequel le capteur de position (6) détecte une position de rotation d'un moteur électrique (5) et comprend une erreur périodique qui est déterminée de manière unique en fonction de la position de rotation, où une composante de fréquence de l'erreur angulaire est connue, le procédé comprenant :

une étape de détection de courant comprenant de détecter le courant circulant dans le moteur électrique (5) ;
une étape d'analyse de fréquence comprenant, en utilisant la position de rotation du moteur électrique (5), d'analyser la fréquence du courant détecté dans l'étape de détection de courant lorsque le contrôle de rétroaction de vitesse est effectuée par le capteur de position (6), et calculer une amplitude d'une composante de fréquence spécifique correspondant à la composante de fréquence de l'erreur angulaire ;
une étape d'estimation d'erreur angulaire comprenant d'estimer, en tant que valeur estimée de l'erreur angulaire, l'erreur angulaire formée à partir de la composante de fréquence spécifique sur la base d'une relation entre l'erreur angulaire et une pulsation de courant, avec l'entrée de l'amplitude étant calculée dans l'étape d'analyse de fréquence et la position de rotation du moteur électrique (5) ; et
une étape de correction d'erreur angulaire comprenant, en utilisant la valeur estimée de l'erreur angulaire, de corriger l'erreur angulaire pour la position de rotation du moteur électrique (5) détectée par le capteur de position (6).

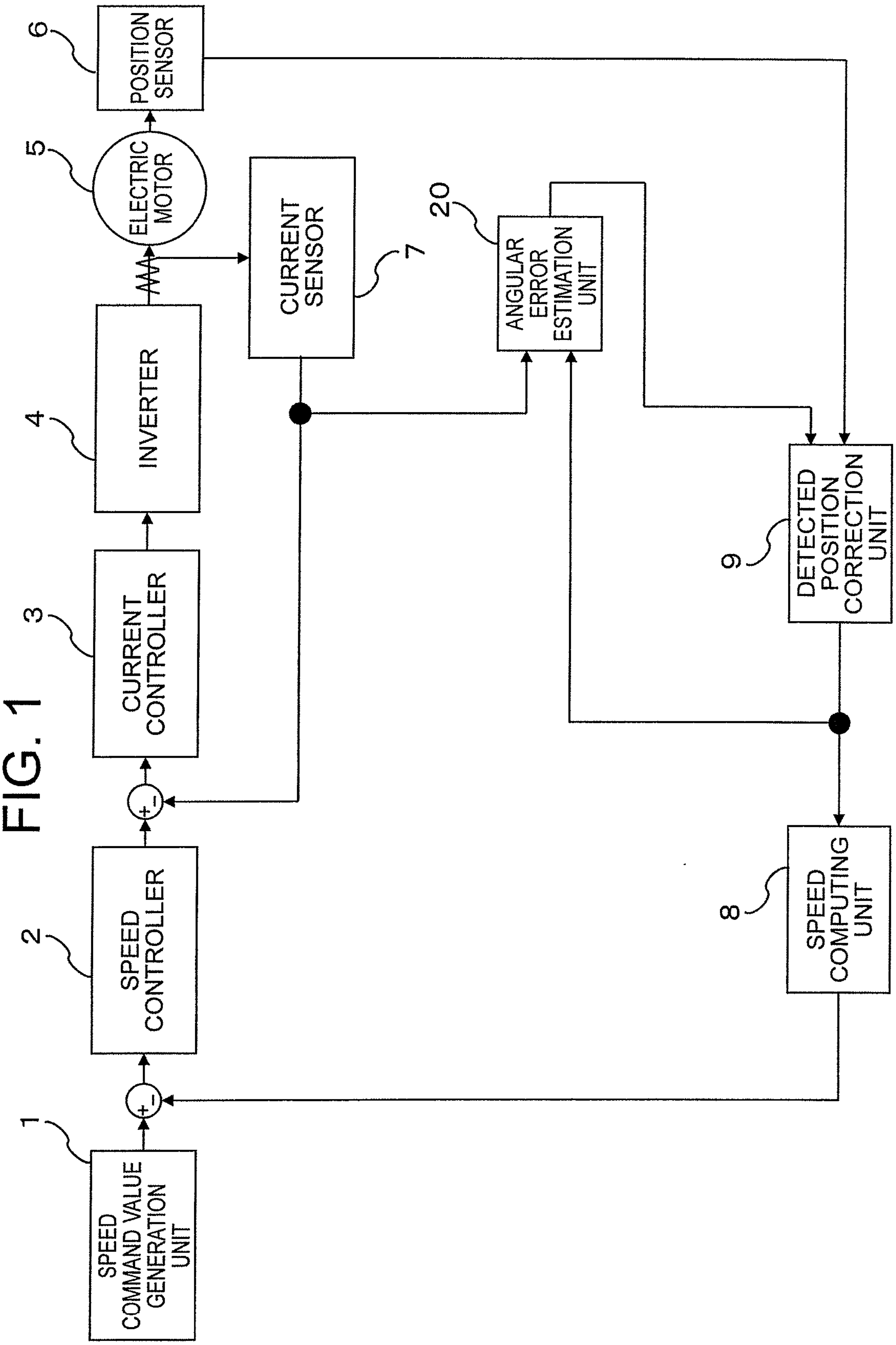
SPEED COMMAND VALUE GENERATION UNIT
1
SPEED CONTROLLER
2
CURRENT CONTROLLER
3
INVERTER
4
ELECTRIC MOTOR
5
POSITION SENSOR
6
CURRENT SENSOR
7
SPEED COMPUTING UNIT
8
DETECTED POSITION CORRECTION UNIT
9
ANGULAR ERROR ESTIMATION UNIT
20
+
-
+
-

FIG. 1

FIG. 2

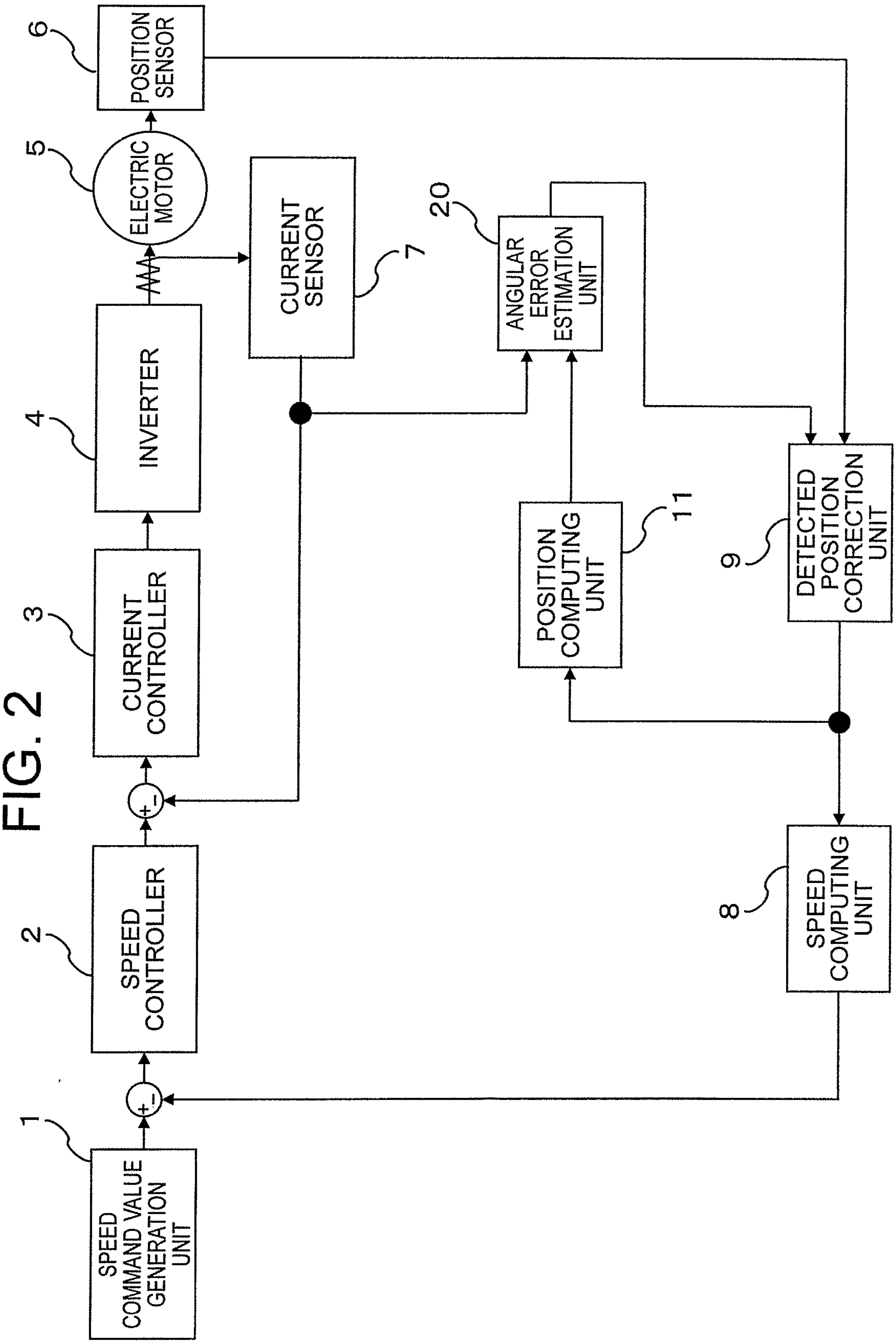
SPEED COMMAND VALUE GENERATION UNIT
1
SPEED CONTROLLER
2
CURRENT CONTROLLER
3
INVERTER
4
ELECTRIC MOTOR
5
POSITION SENSOR
6
CURRENT SENSOR
7
SPEED COMPUTING UNIT
8
DETECTED POSITION CORRECTION UNIT
9
POSITION COMPUTING UNIT
11
ANGULAR ERROR ESTIMATION UNIT
20
+
-
+
-

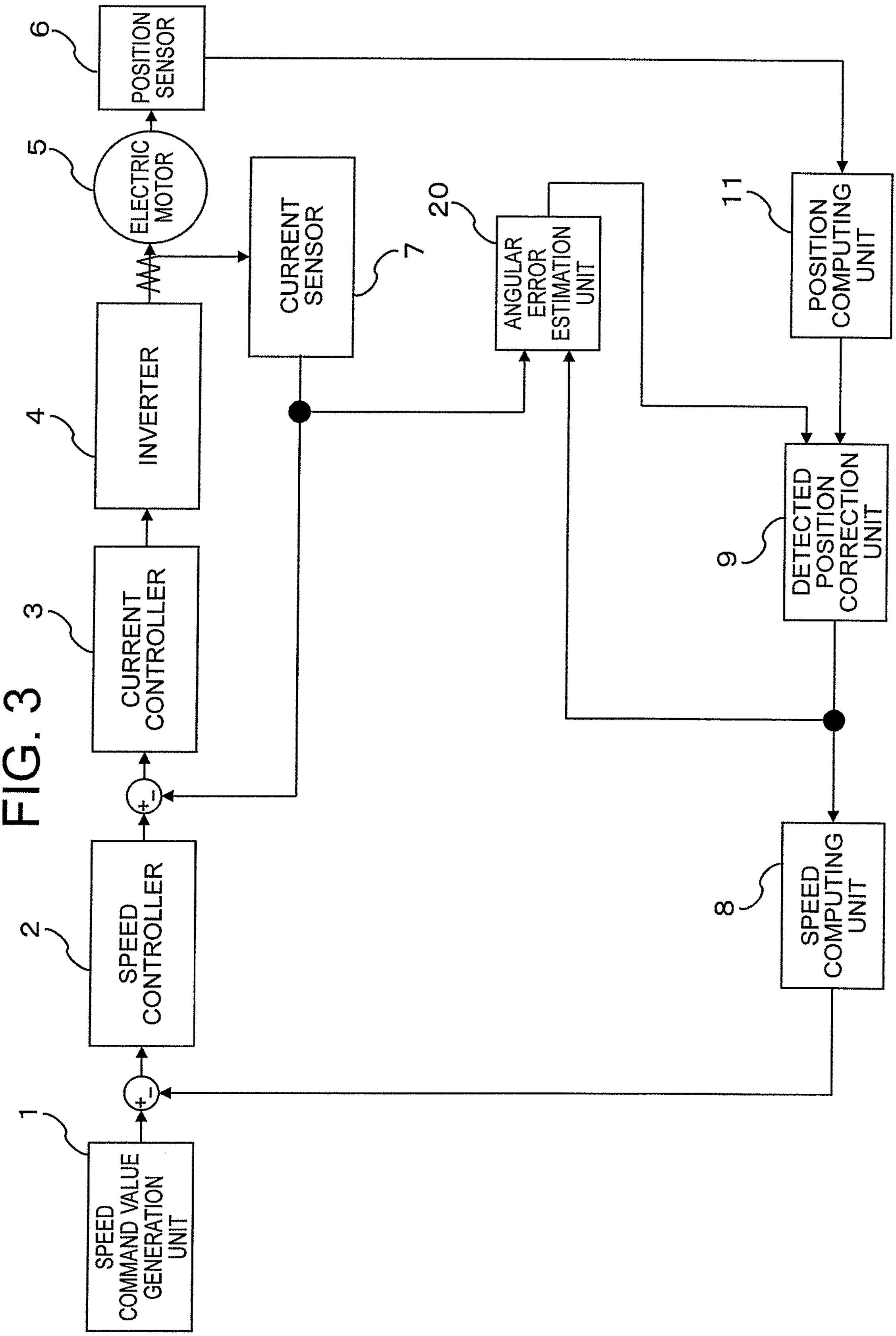
SPEED COMMAND VALUE GENERATION UNIT
1
SPEED CONTROLLER
2
CURRENT CONTROLLER
3
INVERTER
4
ELECTRIC MOTOR
5
POSITION SENSOR
6
CURRENT SENSOR
7
SPEED COMPUTING UNIT
8
DETECTED POSITION CORRECTION UNIT
9
POSITION COMPUTING UNIT
11
ANGULAR ERROR ESTIMATION UNIT
20
+
-
+
-

FIG. 3

FIG. 4

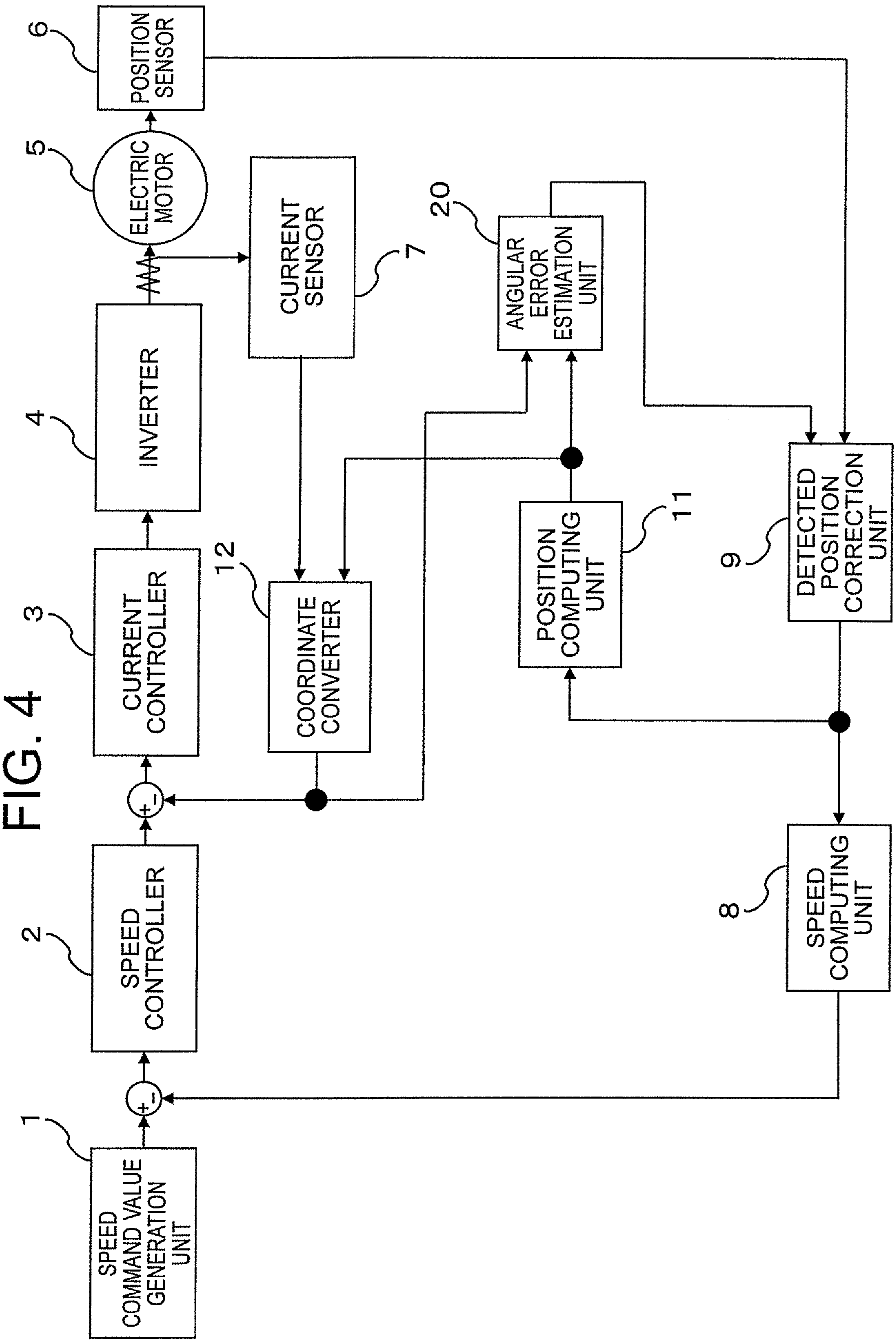
SPEED COMMAND VALUE GENERATION UNIT
1
SPEED CONTROLLER
2
CURRENT CONTROLLER
3
INVERTER
4
ELECTRIC MOTOR
5
POSITION SENSOR
6
CURRENT SENSOR
7
COORDINATE CONVERTER
12
ANGULAR ERROR ESTIMATION UNIT
20
POSITION COMPUTING UNIT
11
DETECTED POSITION CORRECTION UNIT
9
SPEED COMPUTING UNIT
8
+
-
+
-

FIG. 5

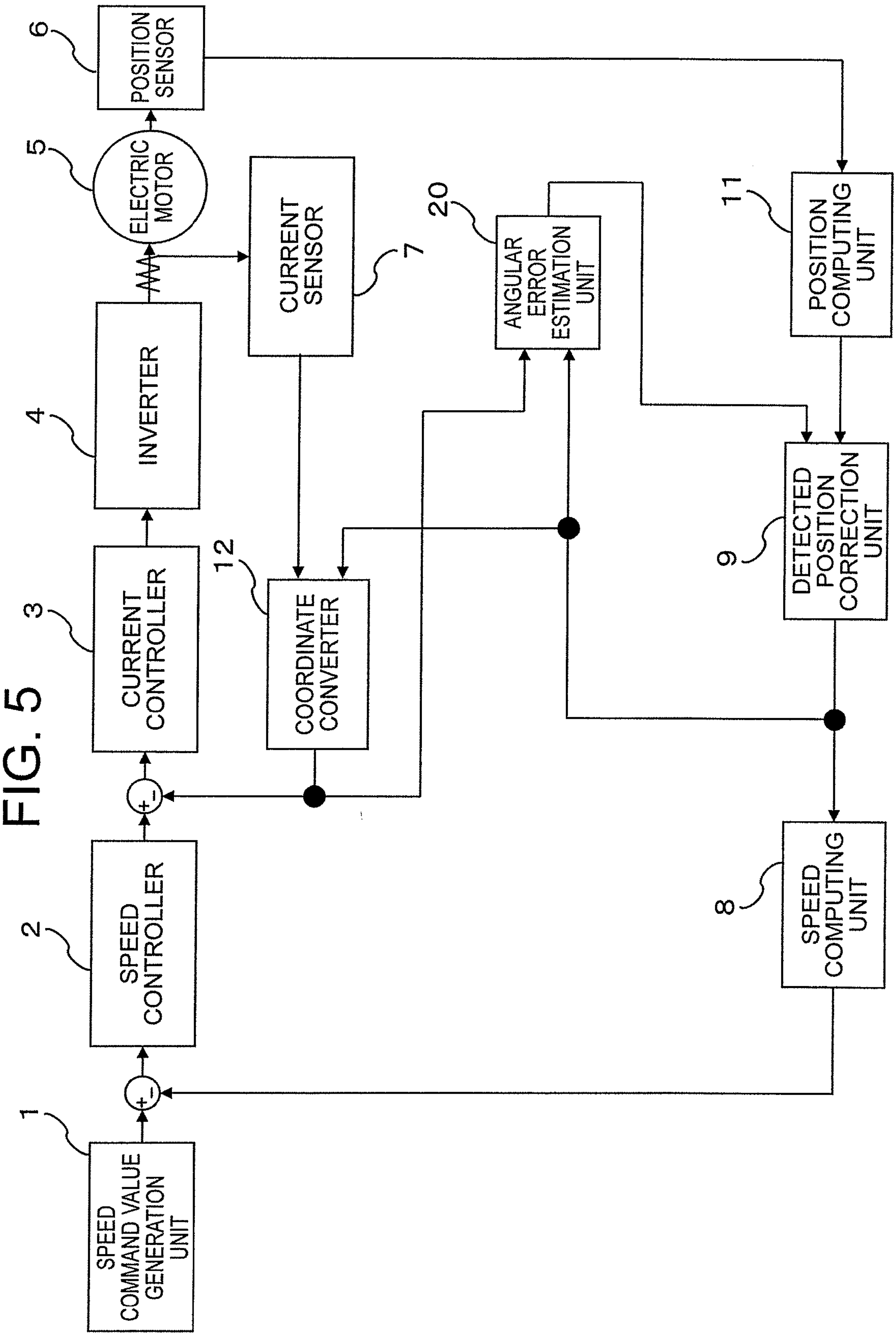
SPEED COMMAND VALUE GENERATION UNIT
1
SPEED CONTROLLER
2
CURRENT CONTROLLER
3
INVERTER
4
ELECTRIC MOTOR
5
POSITION SENSOR
6
CURRENT SENSOR
7
SPEED COMPUTING UNIT
8
DETECTED POSITION CORRECTION UNIT
9
POSITION COMPUTING UNIT
11
COORDINATE CONVERTER
12
ANGULAR ERROR ESTIMATION UNIT
20
+
-
+
-

# FIG. 6

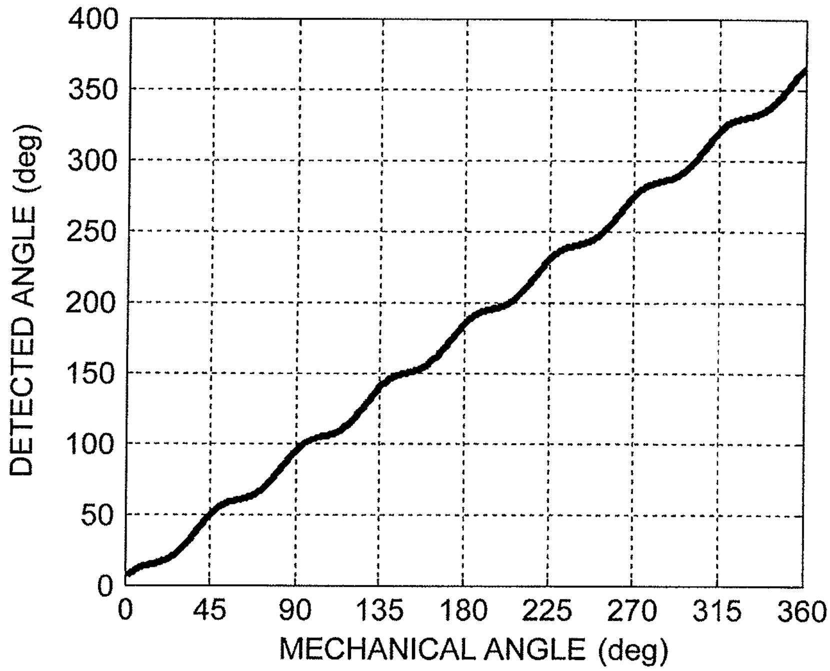
400
350
300
250
200
150
100
50
0
DETECTED ANGLE (deg)
0
45
90
135
180
225
270
315
360
MECHANICAL ANGLE (deg)

FIG. 7

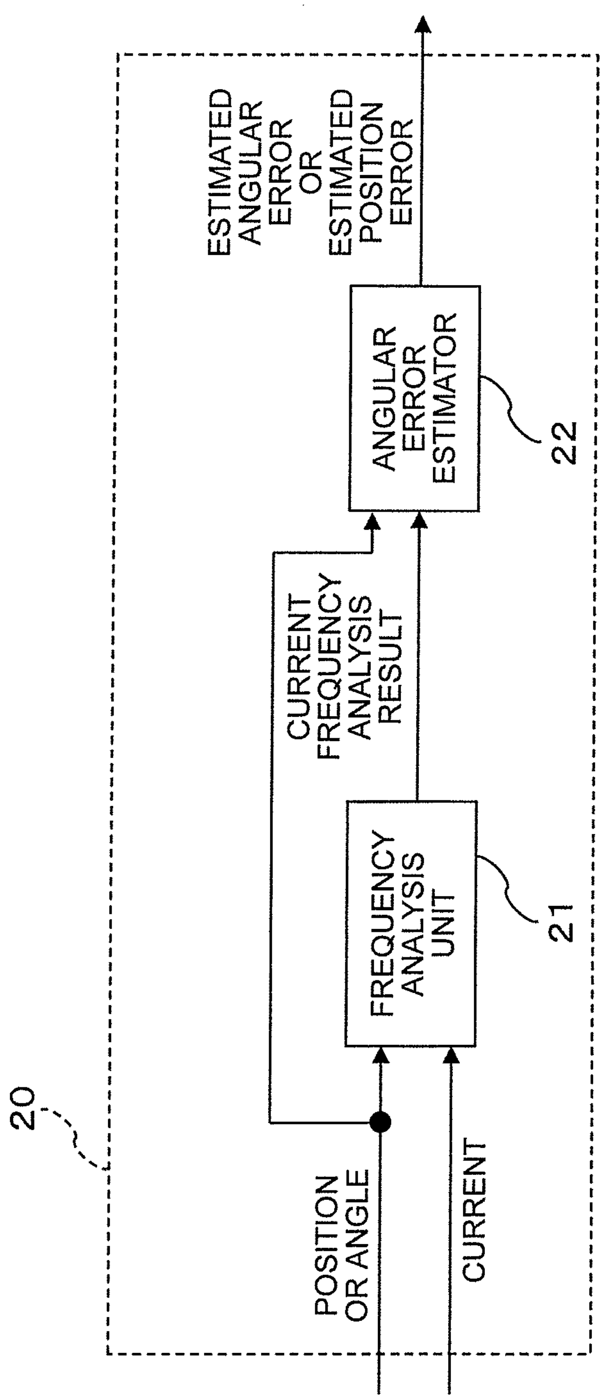
20
POSITION OR ANGLE
CURRENT
FREQUENCY ANALYSIS UNIT
21
CURRENT FREQUENCY ANALYSIS RESULT
ANGULAR ERROR ESTIMATOR
22
ESTIMATED ANGULAR ERROR OR ESTIMATED POSITION ERROR

FIG. 8

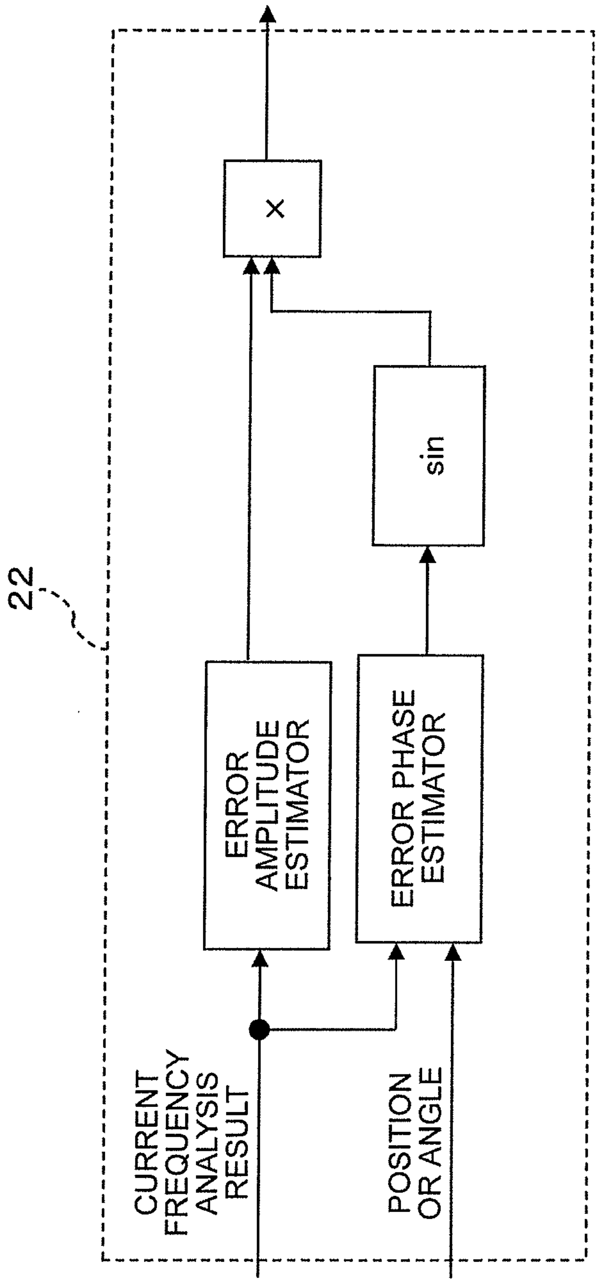
22
CURRENT FREQUENCY ANALYSIS RESULT
POSITION OR ANGLE
ERROR AMPLITUDE ESTIMATOR
ERROR PHASE ESTIMATOR
sin
×

FIG. 9

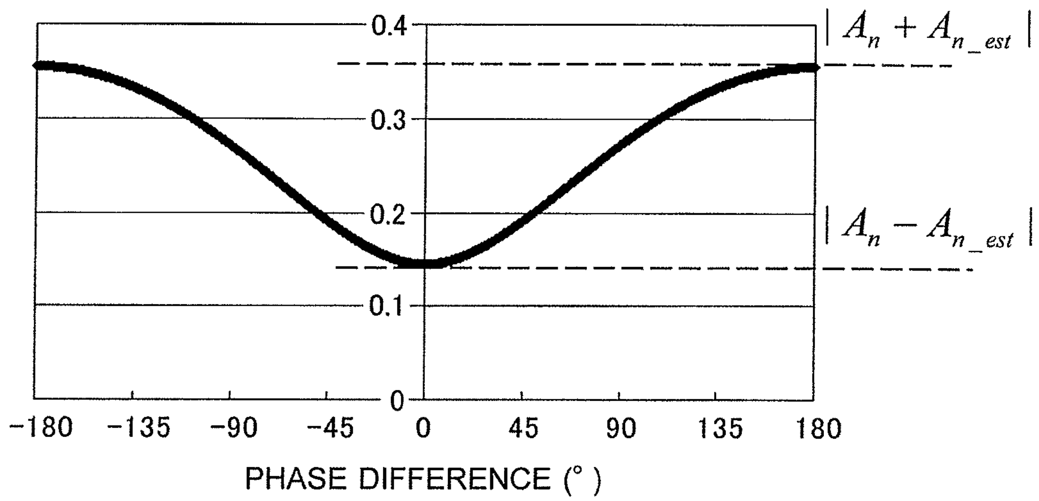
0.4
0.3
0.2
0.1
0
$|A_n + A_{n_est}|$
$|A_n - A_{n_est}|$
−180
−135
−90
−45
0
45
90
135
180
PHASE DIFFERENCE (° )

FIG. 10

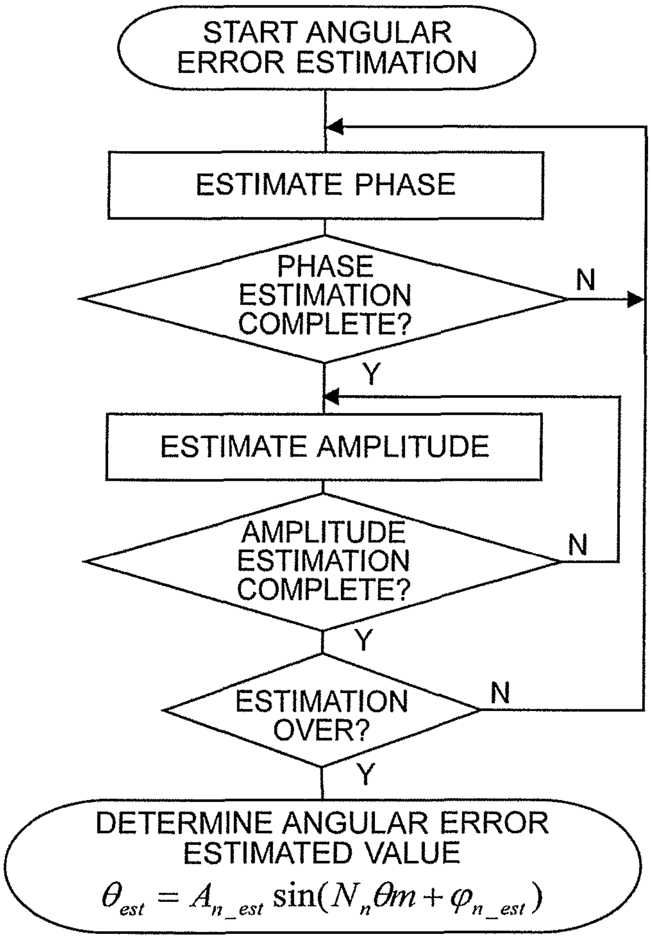
START ANGULAR ERROR ESTIMATION
ESTIMATE PHASE
PHASE ESTIMATION COMPLETE?
N
Y
ESTIMATE AMPLITUDE
AMPLITUDE ESTIMATION COMPLETE?
N
Y
ESTIMATION OVER?
N
Y
DETERMINE ANGULAR ERROR ESTIMATED VALUE
$\theta_{est} = A_{n_est} \sin(N_n \theta m + \varphi_{n_est})$

FIG. 11

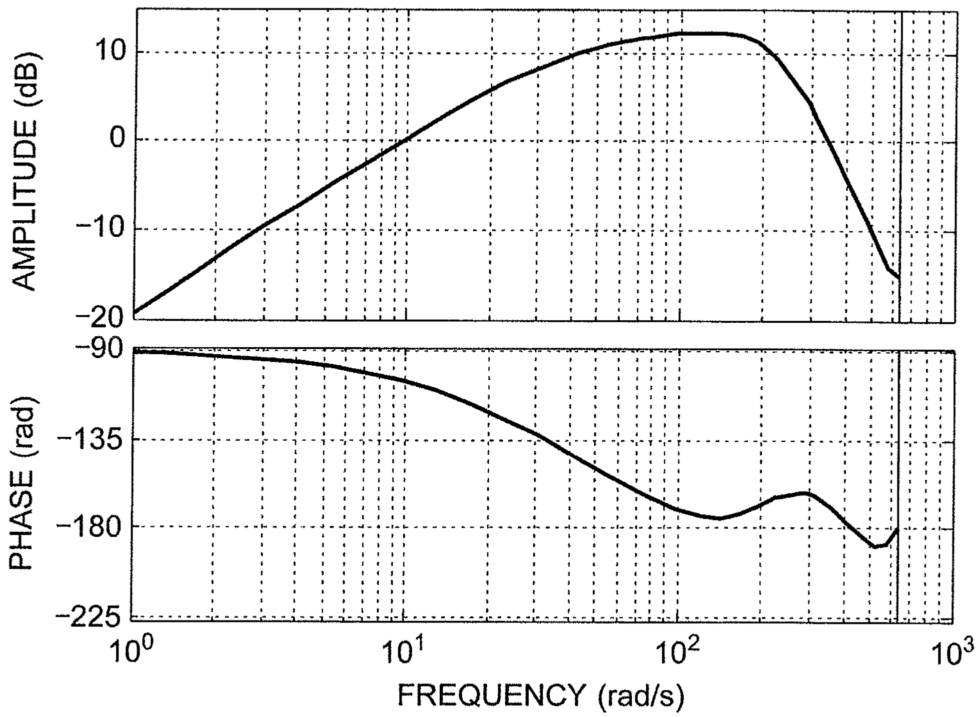
10
0
−10
−20
AMPLITUDE (dB)
−90
−135
−180
−225
PHASE (rad)
$10^0$
$10^1$
$10^2$
$10^3$
FREQUENCY (rad/s)

FIG. 12

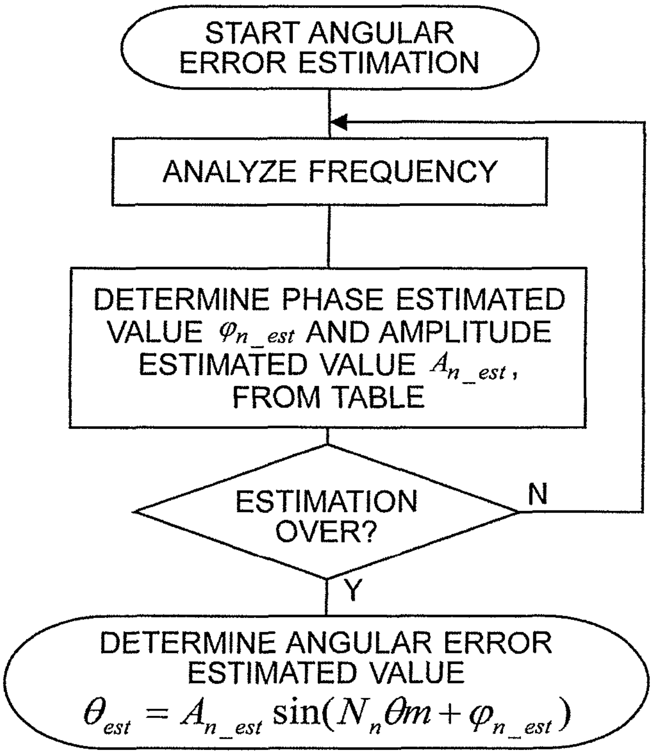
START ANGULAR ERROR ESTIMATION
ANALYZE FREQUENCY
DETERMINE PHASE ESTIMATED VALUE $\varphi_{n_est}$ AND AMPLITUDE ESTIMATED VALUE $A_{n_est}$, FROM TABLE
ESTIMATION OVER?
N
Y
DETERMINE ANGULAR ERROR ESTIMATED VALUE
$\theta_{est} = A_{n_est} \sin(N_n \theta m + \varphi_{n_est})$

FIG. 13

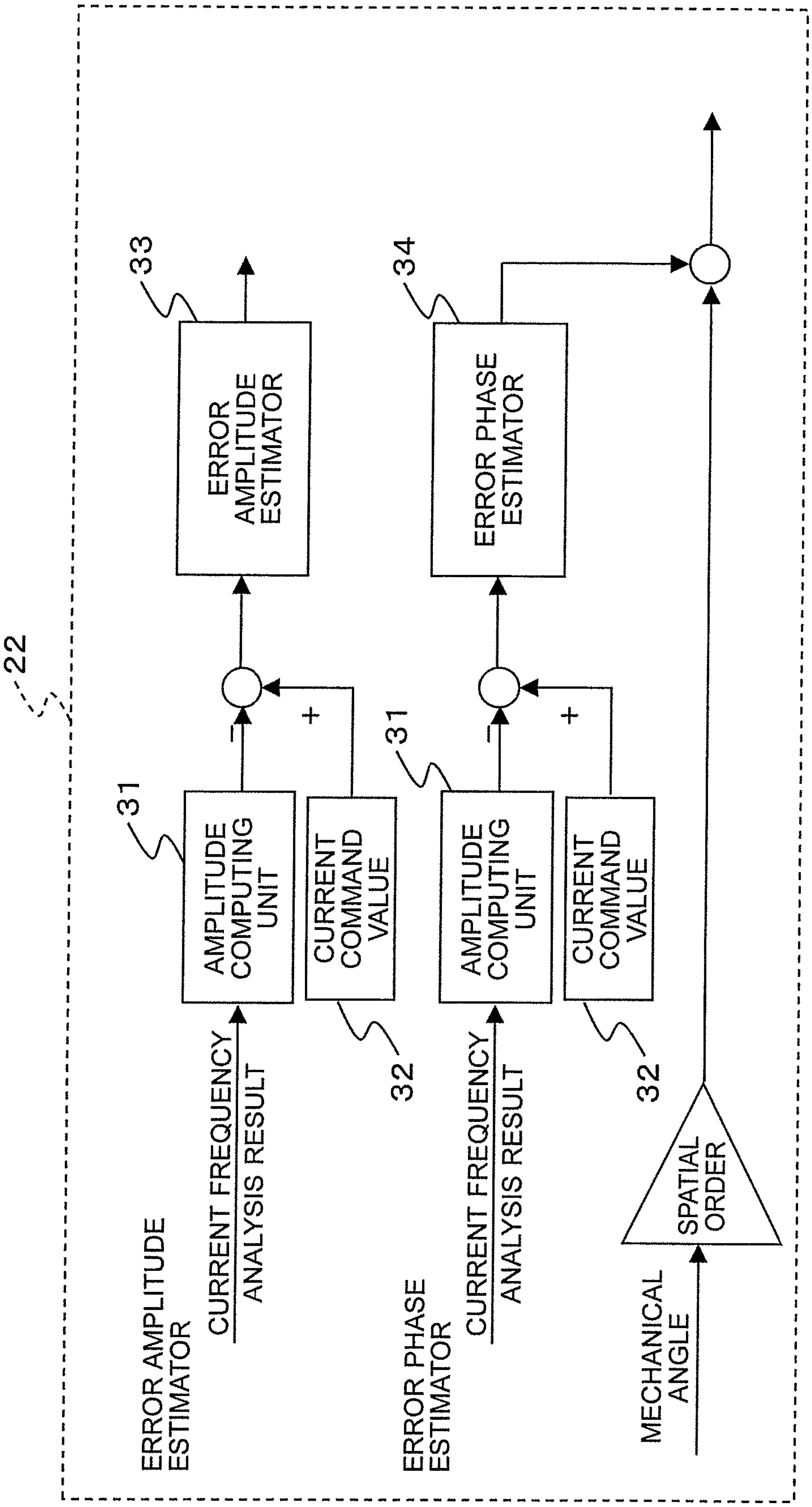
22
ERROR AMPLITUDE ESTIMATOR
CURRENT FREQUENCY
ANALYSIS RESULT
AMPLITUDE COMPUTING UNIT
31
CURRENT COMMAND VALUE
32
−
+
ERROR AMPLITUDE ESTIMATOR
33
ERROR PHASE ESTIMATOR
CURRENT FREQUENCY
ANALYSIS RESULT
AMPLITUDE COMPUTING UNIT
31
CURRENT COMMAND VALUE
32
−
+
ERROR PHASE ESTIMATOR
34
MECHANICAL ANGLE
SPATIAL ORDER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012145371 A
- US 20060022628 A1
- JP 2012210067 A
- EP 1796257 A1